(19) Europäisches Patentamt

European Patent Office

Office européen des brevets

(11) **EP 1 481 496 B1**

(12) **EUROPEAN PATENT SPECIFICATION**

(45) Date of publication and mention
of the grant of the patent:
**11.06.2008 Bulletin 2008/24**

(21) Application number: **02710919.8**

(22) Date of filing: **29.01.2002**

(51) Int Cl.:
***H04B 7/04*** (2006.01)

(86) International application number:
**PCT/FI2002/000065**

(87) International publication number:
**WO 2003/069800 (21.08.2003 Gazette 2003/34)**

(54) **DATA TRANSFER METHOD IN RADIO SYSTEM**

DATENTRANSFERVERFAHREN IN EINEM FUNKSYSTEM

PROCEDE DE TRANSFERT DE DONNEES DANS UN SYSTEME RADIO

(84) Designated Contracting States:
**AT BE CH CY DE DK ES FI FR GB GR IE IT LI LU
MC NL PT SE TR**

(43) Date of publication of application:
**01.12.2004 Bulletin 2004/49**

(73) Proprietor: **Nokia Corporation
02150 Espoo (FI)**

(72) Inventors:
• **Tirkkonen, Olav
FIN-00720 Helsinki (FI)**
• **Soininen, Pekka
New Mexico 87505 (US)**

(74) Representative: **Antila, Harri Jukka Tapani
Kolster Oy Ab,
P.O. Box 148,
Iso Roobertinkatu 23
00121 Helsinki (FI)**

(56) References cited:
**EP-A2- 1 143 636          WO-A1-00/72465
US-A- 5 634 199**

• **JONGREN G. ET AL.: 'Utilizing quantized
feedback information in orthogonal space-time
block coding' IEEE GLOBAL
TELECOMMUNICATIONS CONFERENCE, 2000.
GLOBECOM'00 vol. 22, 27 November 2000 - 01
December 2000, pages 995 - 999, XP001017234**
• **HOTTINEN A. ET AL.: 'Transmit diversity using
filtered feedback weights in the FDD/WCDMA
system' INTERNATIONAL ZURICH SEMINAR ON
BROADBAND COMMUNICATIONS, 2000.
PROCEEDINGS 15 February 2000 - 17 February
2000, pages 15 - 21, XP002151874**

**Description**

FIELD

The invention relates to a data transfer method in a radio system. The invention relates particularly to a data transfer method wherein more than one antenna is used both at a transmitter and a receiver for transmitting and receiving signals.

BACKGROUND

It is generally known that in telecommunication connections, the radio transmission path used for transmitting signals causes interference to telecommunication, the interference typically being functions of time and place. Interference on a radio transmission path includes radio path fading caused to a radio field by the environment, and interference caused by other radio devices, such as multi-use interference of a radio system. In connection with moving terminal equipment in particular, the transmission path quality may often vary considerably between different connections and even during a single connection.

A solution to the problem is to use different modes of diversity, such as time diversity, frequency diversity and antenna diversity, at a transmitter. Time diversity utilizes interleaving and encoding of a signal to be transmitted, but this causes delay to transmission, particularly to slowly fading channels. In frequency diversity, a signal is simultaneously transmitted at several frequencies; however, frequency diversity is an inefficient method when coherence bandwidth is high.

In antenna diversity, a signal is transmitted and usually also received by antenna arrays comprising at least two antenna elements, and the aim is to make the mutual correlation between the elements low by means of physical placing and polarization, for example. The radio transmission paths between the antenna elements of transmitting antennas and the antenna elements of receiving antennas then constitute physical radio channels that can be turned into virtual data transfer channels. A way to utilize antenna diversity is a method called MIMO (Multiple Input, Multiple Output) whose theoretical data transfer capacity increases linearly as the number of transmitting antennas and receiving antennas increase. In order to achieve errorless transmission, it is preferable that at least some of the characteristics of the radio path are known to a transmitter; this knowledge enables a possible transmit filter to be modified. Particularly in FDD (Frequency Division Duplex) systems, a partial knowledge of the radio path is problematic since the physical channels on the uplink and the downlink transmission path are not identical; consequently, the transmit filter information on a transmitter is usually generated at a receiver. In such a case, the receiver must transmit the generated transmit filter information on the transmitter to the transmitter in one way or another.

In the prior art solutions, the transmit filter information on a transmitter generated by a receiver is as such transmitted to the transmitter, in which case previous transmit filter information on the transmitter is replaced by new transmit filter information in each update. The amount of data to be transmitted is thus in the order of $N^2-1$, wherein N is the number of virtual data transmission channels. Drawbacks of the prior art solutions include transfer of unnecessary information and subsequent unnecessary loading of data transfer capacity when the transmit filter information on a transmitter is updated.

BRIEF DESCRIPTION

An object of the invention is to provide a data transfer method and a radio system implementing the data transfer method so as to enable transmit filter information on a transmitter generated by a receiver to be transferred from the receiver to the transmitter at a low data transfer capacity.

This is achieved by a data transfer method in a radio system comprising a transmitter comprising at least one antenna array comprising at least two antennas, and at least one receiver comprising at least one antenna array comprising at least two antennas, the radio system comprising a physical radio channel between the transmitter and the receiver, and the data transfer method comprising filtering, by means of transmit filter information, a signal to be transmitted via the antennas of the antenna array of the transmitter and generating, at the receiver, a variable which contains transmit filter information on the transmitter. The method of the invention comprises generating, at the receiver, at least part of a change in the variable containing transmit filter information on the transmitter, transmitting at least part of the change in the variable containing transmit filter information on the transmitter from the receiver to the transmitter, and updating, at the transmitter, the transmit filter information on the transmitter on the basis of the received change in the variable containing transmit filter information.

The invention further relates to a radio system implementing the data transfer method. The radio system of the invention comprises a transmitter comprising at least one antenna array comprising at least two antennas, and at least one receiver comprising at least one antenna array comprising at least two antennas, the radio system comprising a physical radio channel between the transmitter and the receiver, the radio system comprising means for filtering, by means of transmit filter information, a signal to be transmitted via the antennas of the antenna array of the transmitter, and means for generating, at the receiver, a variable which contains transmit filter information on the transmitter. In the radio system of the invention, the receiver comprises means for generating at least part of a change in the variable containing transmit filter information on the transmitter, the receiver is arranged to transmit at least part of the change in the variable containing transmit filter information on the transmitter to the transmitter, and the means for filtering are arranged to update the transmit filter information on the transmitter on the basis of the received change in the variable containing transmit filter information.

Preferred embodiments of the invention are disclosed in the dependent claims.

The invention is based on the idea that a receiver generates a variable which contains transmit filter information on a transmitter, and a change in the variable as compared with a previous value of the variable known to the transmitter and the receiver is transmitted to the transmitter, which updates its transmission filtering on the basis of the received information about the change.

The method and system of the invention provide several advantages. An essential advantage of the invention is that the amount of data to be transmitted to the transmitter to be used for updating a transmit filter can be optimised, thus enabling unnecessary loading of the radio capacity to be avoided.

LIST OF DRAWINGS

The invention is now described in closer detail in connection with the preferred embodiments and with reference to the accompanying drawings, in which

Figure 1 is a simplified block diagram showing a telecommunication system,

Figure 2a is another simplified block diagram showing a telecommunication system,

Figure 2b is a simplified block diagram showing terminal equipment, and

Figure 3 is a block diagram showing the present solution.

DESCRIPTION OF EMBODIMENTS

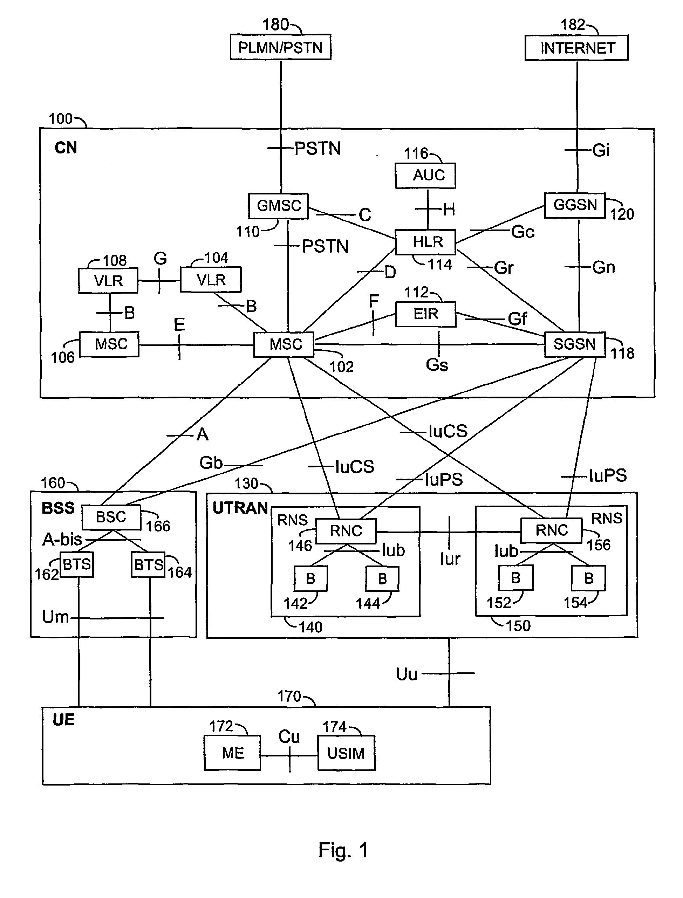

Since second generation (2G) radio systems and third generation (3G) radio systems as well as different hybrids thereof, i.e. so-called 2.5G radio systems, are already being used all over the world and under constant development, embodiments will be described in a radio system illustrated in Figure 1 wherein network elements of different generations coexist. In the description, the 2G radio system is represented e.g. by a GSM (Global System for Mobile Communications). The 2.5G is represented e.g. by a GPRS (General Packet Radio System). The 3G radio system is represented e.g. by a system which is based on the GSM system and which utilizes 3G EDGE (Enhanced Data Rates for Global Evolution) technology, and systems known at least by the names IMT-2000 (International Mobile Telecommunications 2000) and UMTS (Universal Mobile Telecommunications System). The embodiments are not, however, restricted to these systems described as examples but a person skilled in the art can also apply the teachings to other radio systems comprising corresponding characteristics.

Figure 1 is a simplified block diagram showing, at a network element level, the most important parts of a radio system and the interfaces therebetween. Being generally known, the structure and functions of the network elements will not be described in greater detail.

The main parts of a radio system are a core network (CN) 100, a radio access network 130 and user equipment (UE) 170. The term UTRAN is short for UMTS Terrestrial Radio Access Network, i.e. the radio access network 130 belongs to the third generation and is implemented by wideband code division multiple access (WCDMA) technology. Figure 1 also shows a base station system 160 implemented by time division multiple access (TDMA) technology.

On a general level, the radio system can also be defined to comprise user equipment, which is also known as a subscriber terminal and mobile phone, for instance, and a network part, which comprises the fixed infrastructure of the radio system, i.e. the core network, radio access network and base station system.

The structure of the core network 100 corresponds to a combined structure of the GSM and GPRS systems. The GSM network elements are responsible for establishing circuit-switched connections, and the GPRS network elements are responsible for establishing packet-switched connections; some of the network elements are, however, included in both systems.

A mobile services switching center (MSC) 102 is the center point of the circuit-switched side of the core network 100. The same mobile services switching center 102 can be used to serve the connections of both the radio access network 130 and the base station system 160. The tasks of the mobile services switching center 102 include: switching, paging, user equipment location registration, handover management, collection of subscriber billing information, encryption parameter management, frequency allocation management, and echo cancellation.

The number of mobile services switching centers 102 may vary: a small network operator may only have one mobile services switching center 102 but large core networks 100 may have several ones. Figure 1 shows a second mobile services switching center 106, but its connections to other network elements are not shown in order to keep Figure 1 sufficiently clear.

Large core networks 100 may have a separate gateway mobile services switching center (GMSC) 110, which is responsible for circuit-switched connections between the core network 100 and external networks 180. The gateway mobile services switching center 110 is located between the mobile services switching centers 102, 106 and the external networks 180. An external network 180 can be for instance a public land mobile network (PLMN) or a public switched telephone network (PSTN).

A home location register (HLR) 114 comprises a permanent subscriber register, i.e. the following information, for instance: an international mobile subscriber identity (IMSI), a mobile subscriber ISDN number (MSISDN), an authentication key, and when the radio system supports GPRS, a packet data protocol (PDP) address.

A visitor location register (VLR) 104 contains roaming information on user equipment 170 in the area of the mobile services switching center 102. The visitor location register 104 comprises almost the same information as the home location register 114, but in the visitor location register 104, the information is kept only temporarily.

An equipment identity register (EIR) 112 comprises the international mobile equipment identities (IMEI) of the user equipment 170 used in the radio system, and a so-called white list, and possibly a black list and a grey list.

An authentication center (AuC) 116 is always physically located in the same place as the home location register 114, and it comprises a subscriber authentication key Ki and a corresponding IMSI.

The network elements shown in Figure 1 are functional entities whose physical implementation may vary. Usually, the mobile services switching center 102 and the visitor location register 104 constitute one physical device while the home location register 114, equipment identity register 112 and the authentication center 116 constitute another physical device.

A serving GPRS support node (SGSN) 118 is the center point of the packet-switched side of the core network 100. The main task of the serving GPRS support node 118 is to transmit and receive packets together with the user equipment 170 supporting packet-switched transmission by using the radio access network 130 or the base station system 160. The serving GPRS support node 118 contains subscriber and location information related to the user equipment 170.

A gateway GPRS support node (GGSN) 120 is the packet-switched side counterpart to the gateway mobile services switching center 110 of the circuit-switched side with the exception, however, that the gateway GPRS support node 120 must also be capable of routing traffic from the core network 100 to external networks 182, whereas the gateway mobile services switching center 110 only routes incoming traffic. In our example, external networks 182 are represented by the Internet.

The base station system 160 comprises a base station controller (BSC) 166 and base transceiver stations (BTS) 162, 164. The base station controller 166 controls the base transceiver station 162, 164. In principle, the aim is that the devices implementing the radio path and their functions reside in the base transceiver station 162, 164 while control devices reside in the base station controller 166.

The base station controller 166 is responsible for the following tasks, for instance: radio resource management of the base transceiver station 162, 164, intercell handovers, frequency control, i.e. frequency allocation to the base transceiver stations 162, 164, management of frequency hopping sequences, time delay measurement on the uplink, implementation of the operation and maintenance interface, and power control.

The base transceiver station 162, 164 comprises at least one transceiver which implements one carrier, i.e. eight time slots, i.e. eight physical channels. Typically, one base transceiver station 162, 164 serves one cell, but a solution is also possible wherein one base transceiver station 162, 164 serves several sectored cells. The diameter of a cell may range between a few meters and dozens of kilometers. The base transceiver station 162, 164 also comprises a transcoder for converting the speech coding format used in the radio system to that used in the public switched telephone network. In practice, however, the transcoder is physically located in the mobile services switching center 102. The tasks of the base transceiver station 162, 164 include: calculation of timing advance (TA), uplink measurements, channel coding, encryption, decryption, and frequency hopping.

The radio access network 130 comprises radio network subsystems 140, 150. Each radio network subsystem 140, 150 comprises radio network controllers (RNC) 146, 156 and nodes B 142, 144, 152, 154. Node B is a rather abstract concept; the term 'base transceiver station' is often used instead.

Operationally, the radio network controller 140, 150 corresponds approximately to the base station controller 166 of the GSM system, and node B 142, 144, 152, 154 corresponds approximately to the base transceiver station 162, 164 of the GSM system. Solutions also exist in which the same device is both the base transceiver station and node B, i.e. the device is capable of implementing both the TDMA and WCDMA radio interfaces simultaneously.

The user equipment 170 comprises two parts: mobile equipment (ME) 172 and a UMTS subscriber identity module (USIM) 174. The GSM system naturally uses its own identity module. The user equipment 170 comprises at least one transceiver for establishing a radio link to the radio access network 130 or base station system 160. The user equipment 170 may comprise at least two different subscriber identity modules. The user equipment 170 further comprises an antenna, a user interface and a battery. Today, different types of user equipment 170 exist, for instance equipment installed in cars and portable equipment.

The USIM 174 comprises user-related information and information related to information security in particular, for instance an encryption algorithm.

Finally, the interfaces between different network elements shown in Figure 1 are listed in Table 1. In the UMTS, the most important interfaces are the lu interface between the core network and the radio access network, which is divided into the luCS (CS = Circuit Switched) interface on the circuit-switched side and the luPS (PS = Packet Switched) interface on the packet-switched side, and the Uu interface between the radio access network and the user equipment. In the GSM, the most important interfaces are the A interface between the base station controller and the mobile services switching center, the Gb interface between the base station controller and the serving GPRS support node, and the Um interface between the base transceiver station and the user equipment. The interface defines what kind of messages different network elements can use in communicating with each other. The aim is to provide a radio system which enables the network elements of different manufacturers to interwork adequately enough to provide a working radio system. In practice, however, some of the interfaces are vendor-dependent.

Table 1

| Interface | Between network elements |
|-----------|--------------------------|
| Uu | UE-UTRAN |
| lu | UTRAN-CN |
| luCS | UTRAN-MSC |
| luPS | UTRAN-SGSN |
| Cu | ME-USIM |
| lur | RNC-RNC |
| lub | RNC-B |
| A | BSS-MSC |
| Gb | BSC-SGSN |
| A-bis | BSC-BTS |
| Um | BTS-UE |
| B | MSC-VLR |
| E | MSC-MSC |
| D | MSC-HLR |
| F | MSC-EIR |
| Gs | MSC-SGSN |
| PSTN | MSC-GMSC |
| PSTN | GMSC-PLMN/PSTN |
| G | VLR-VLR |
| H | HLR-AUC |
| Gc | HLR-GGSN |
| Gr | HLR-SGSN |
| Gf | EIR-SGSN |
| Gn | SGSN-GGSN |
| Gi | GGSN-INTERNET |

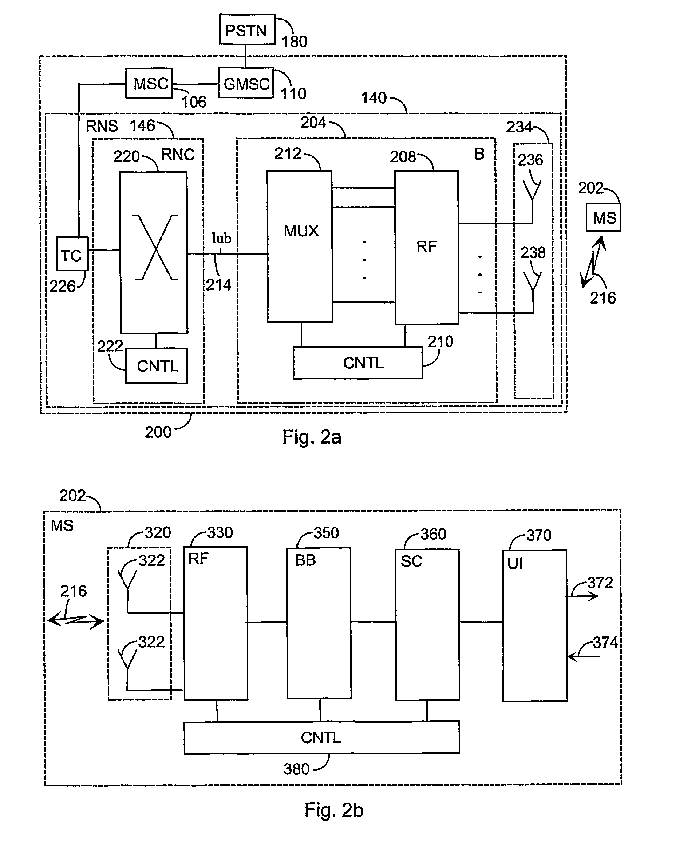

The description shown in Figure 1 is quite general, so Figure 2a shows a more detailed example of a cellular radio system. Figure 2a only comprises the most essential blocks, but it is obvious to one skilled in the art that a conventional cellular radio network also comprises other functions and structures that need not be explained in closer detail herein. The details of a cellular radio system may differ from those shown in Figure 2a, but these differences are irrelevant to the invention.

Figure 2a shows a mobile services switching centre 106, a gateway mobile services switching centre 110, which is responsible for the connections of the mobile communication system to the external world, herein to the public telephone network 180, and a network part 200 and terminal equipment 202.

A cellular radio network typically comprises a fixed network infrastructure, i.e. a network part 200, and terminal equipment 202, which may be fixedly mounted, vehicle mounted, or portable terminal equipment, such as mobile telephones or portable computers, which enable communication with a radio communications system. The network part 200 comprises base transceiver stations 204. A base transceiver station corresponds with node B in the previous figure. A plurality of base transceiver stations 204, in turn, is controlled in a centralized manner by a radio network controller 146 communicating with the base transceiver stations and comprising a group switching field 220 and a control unit 222. The group switching field 220 is used for switching speech and data and for connecting signalling circuits. The control unit 222, in turn, carries out call control, mobility management, collection of statistical data, signalling and control and management of resources.

The base transceiver station 204 and the radio network controller 146 constitute a radio network subsystem 140, which further comprises a transcoder 226, which converts different digital speech encoding formats used between a public telephone network and a radio telephone network into compatible ones, e.g. from the format of the fixed network into another format of the cellular radio network, and vice versa. The transcoder 226 is usually located as close to a mobile services switching centre 106 as possible because this allows speech to be transmitted between the transcoder 226 and the radio network controller 146 in a cellular radio network form, which saves transmission capacity.

The base transceiver station 204 further comprises a multiplexer unit 212, transceivers 208 and a control unit 210, which controls the operation of the transceiver 208 and the multiplexer 212. The multiplexer 212 is used for arranging the traffic and control channels used by a plurality of transceivers 208 onto a single transmission connection 214. The transmission connection 214 constitutes an interface lub. Furthermore, the multiplexer unit 212 carries out error correction operations and, possibly, bit interleaving and deinterleaving.

The transceivers 208 of the base transceiver station 204 are connected to an antenna array 234 comprising at least two antennas 236 and 238. The antenna array 234 is used for implementing at least one radio connection 216 to at least one terminal 202. The structure of the frames transmitted on the at least one radio connection 216 is determined system-specifically, and it is called an air interface Uu.

Figure 2b shows the structure of the terminal equipment 202 by means of a block diagram. The terminal equipment 202 comprises a user interface UI 370, a source codec unit SC 360 SC, a baseband part BB 350, a transceiver 330, an antenna array 320 and a control unit 380.

The user interface 370 of the terminal equipment 202 comprises e.g. the terminal's keyboard and audiovisual means, such as a display, microphones and earphones. The user interface 370 enables the operation of the terminal equipment 202 to be controlled, and the user interface 370 is also responsible for delivering a signal 372 produced by a user and directed to the terminal equipment 202 and for converting a signal 374 supplied from the terminal equipment 202 and directed to the user into a form understood by the user. The user interface 370 may also be located in a peripheral device, such as a computer, connected to the terminal equipment 202. A source encoding unit 360 comprises source encoding and carries out digital signal processing.

The baseband part 350 comprises signal processors and necessary memory means for processing the signals to be transmitted to and received from the transceiver 330. The baseband part 350 is, for example, used for carrying out the digital transmitter and receiver filtering of the terminal equipment 202. Furthermore, a signal to be transmitted is spread with a spreading code and a received signal is despread at the baseband part.

The transceiver 330 converts a received radio-frequency signal into a baseband one and a baseband signal to be transmitted into a radio-frequency one. The transceiver 330 further comprises amplifiers for amplifying and possibly for phasing the signals to be transmitted from and received by antennas 322 according to control commands issued by the control unit 380. Signals are amplified and phased at the transceiver in analogue form. The transceiver 330 also comprises duplex filters to enable a signal to be transmitted and a signal to be received to be separated.

The control unit 380 controls the operation of the transceiver 380, baseband part 350 and the source encoding unit 360. The control unit 380 gives the transceiver 380 and the baseband part 380, for example, control commands determining the settings of transmit filters, on the basis of which the transceiver 380 and the baseband part 380 implement the physical filtering of a signal. Furthermore, the control unit 380 is responsible for the higher layer signalling, which is associated with connection setup and maintenance and resource allocation, for example. The control unit 380 further comprises a processor and memory means to enable execution of processes, such as calculation procedures, programmed in the control unit.

The antenna array 320 comprises at least two antennas 322 arranged, utilizing physical disposition, for example, to enable low correlation between the antennas 322. The distance between the antennas is then typically 0.5 - 1.5 times the length of the carrier used. Some of the antennas may also be in different polarizations, which means that the distance therebetween may typically be less than 0.5 times the carrier length.

The solution set forth is not restricted to be implemented in the radio system disclosed above but it can be applied to any radio system that allows the multiple antenna technology to be utilized. Such systems include wireless local area networks (W-LAN), wireless personal area networks (W-PAN) and Bluetooth networks, for example.

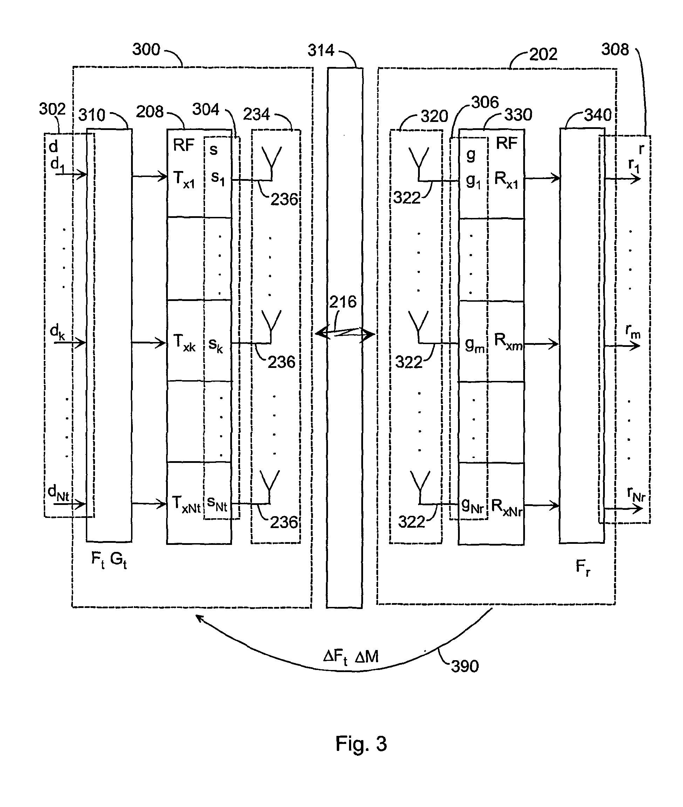

For the sake of simplicity, Figure 3 is restricted to view at least one transmitter 300 and at least one receiver 202 according to a preferred embodiment of the present solution. The transmitter 300, which is usually a base transceiver station 204, comprises a transceiver 208, an antenna array 234 and a transmit filter 310. The number $N_t$ of transmitting antennas 236 in the antenna array 234 is $N_t>1$. Transmit filtering can preferably be implemented at the transceiver 208 of the base transceiver station 204 or at a multiplexer unit 212.

In Figure 3, the terminal equipment 202 serves as a receiver comprising an antenna array 320 which, in turn, comprises antennas 322 whose number is $N_r>1$. The receiver 202 further comprises a receive filter 340, which carries out signal filtering, preferably at the transceiver 330 of the terminal equipment 202 or at the baseband part 350.

Above, the radio system parts have been named as a transmitter 300 and a receiver 202 only for the sake of simplicity; the present solution is thus not restricted to the appellations used.

The radio connection 216 between the transmitter 300 and the receiver 202 is set up using a radio transmission path 314. The radio transmission path 314 comprises an environment which may cause changes in the phases and amplitudes of the radio signals to be transmitted.

Figure 3 also shows how the signal propagates at the transmitter 300, on the radio transmission path 314 and at the receiver 202. In Figure 3, a data signal 302, which can preferably be presented by a signal vector $d = (d_1, d_2,... d_k, d_{Nt})$, is directed to the transmit filter 310. The signal vector can be directed at the transmitter as separated e.g. in terms of location, time or encoding; the point is to enable the data signal components $d_k$ to be processed at the transmitter 300 independently of each other. The elements $d_k$ of the data signal vector d are typically complex numbers that comprise the information to be transmitted possibly in an encoded form. The information to be transmitted may also be in an interleaved form. The transmit filter 310 directs filtering to the data signal 302, the filtering preferably being presented by a transmit filter matrix $F_t$. The transmit filter matrix may comprise implicitly normalized weighting, which comprises the ratios of the weights of the signals transmitted from each antenna 236. A weighted transmit filter matrix can be presented in a matrix form $F_t = G_t F_{t,nw}$, wherein $G_t$ is a normalized weight matrix comprising as its diagonal elements the ratios of the weights of the signals transmitted from each antenna 236, and $F_{t,nw}$ is an unweighted transmit filter matrix. The transmit filter matrix can preferably be generated at the radio network controller 146 or the base transceiver station 204. Preferably, the physical transmit filtering of the signal can be implemented at the transceivers 208 of the base transceiver station, in which case analogue filtering is carried out. Transmit filtering can also preferably be implemented at the multiplexer unit 212 of the base transceiver station, in which case the transmit filtering is carried out digitally.

As a result of the filtering carried out by the transmit filter 310, the data signal 302 is converted into a new signal 304, which can preferably be presented by a signal vector $s = (s_1, s_2,...s_k, s_{Nt})$. The signal vector s is obtained by means of the signal vector d, transmit filter matrix $F_t$ and a noise vector $Q_t$ in the following manner: $s^T = F_t d + Q_t$, wherein the superscript T refers to the transpose of the matrix. Each element $s_k$ of the signal vector s represents the strength and phase of a signal supplied from each antenna k of the antenna array 234 of the transmitter 300. The signal 304 presented by the signal vector s is transmitted to the radio transmission path 314 by using at least two antennas 236. $Q_t$ is the noise generated at the transmit filter.

The receiver 202 receives a signal 306, which can preferably be presented by means of a signal vector $g = (g_1, g_2,...g_m, g_{Nr})$. Each element $g_m$ of the signal vector represents the strength and phase of a signal received by each antenna m of the antenna array 320. The signal vector g can be presented e.g. by means of a channel matrix H and the signal vector s in the following manner:

$$g^T = Hs + Q_H \, , \qquad\qquad\qquad (1)$$

wherein the superscript T refers to the transpose of the matrix, and $Q_H$ presents a noise vector generated on the radio transmission path 314. In this description, the matrix H may contain echoes, which is why the signal vector s may comprise several copies of the signal vector transmitted by the transmitter.

The channel matrix H presents a physical radio channel, i.e. a channel estimate, between the transmitter 300 and the receiver 202. The channel matrix H can be written e.g. in the form

$$H = \begin{pmatrix} H_{11} & \cdots & \cdots & H_{1,N_r} \\ \vdots & \ddots & \cdots & \vdots \\ \vdots & \cdots & H_{mk} & \vdots \\ H_{N_t,1} & \cdots & \cdots & H_{N_t N_r} \end{pmatrix}, \qquad (2)$$

wherein each element $H_{mk}$ of the channel matrix H represents the effect, such as attenuation, phase shift and radio echo, of the radio transmission path 314 between the transmitting antenna k and the receiving antenna m on the signal 216 between the transmitting antenna k and the receiving antenna m. Let us first confine ourselves to a situation wherein no radio echo exists.

The signal 306 is supplied to the receive filter 340, which converts the signal 306 into a signal 308. Receive filtering can preferably be implemented at the transceiver 330 of the receiver 202, in which case analogue filtering is carried out. In an embodiment, receive filtering is implemented digitally at the baseband part 350 of the receiver 202. The filtering carried out on the signal 306 by the receive filter 340 can be presented using a receive filter matrix $F_r$ in the following manner: $r^T = F_t^{-1}g + Q_r$, wherein $F_r^{-1}$ is the inverse matrix of the filter matrix $F_r$, and the noise vector $Q_r$ represents the noise generated at the receiver 202. The receive filter matrix is preferably generated at the control unit 380 of the receiver 202.

In an embodiment of the present solution, the matrix $F_{t,nw}$ representing the unweighted transmit filter 310 and the matrix $F_r$ representing the receive filter are unitary-like complex matrices, and when they are directed at a vector, the direction of the vector is changed but the length of the vector is changed only by small amounts. In addition, variables $F_{t,nw}{}^\dagger F_{t,n}$, and $F_r{}^\dagger F_r$ resemble a unit matrix, wherein $F_{t,nw}{}^\dagger$ is the conjugate transpose of the matrix $F_{t,nw}$ and wherein $F_r{}^\dagger$ is the conjugate transpose of the matrix $F_r$.

After passing through the transmitter 300, radio transmission path 314 and the receiver 202, the data signal 302 has become the signal 308. In a preferred embodiment of the present solution, the signal vector r representing the signal 308 generated by the receive filter 340 can be presented using the transmitted data signal vector d, the inverse matrix $F_t^{-1}$ of the transmit filter matrix $F_t$, the channel matrix H and the receive filter matrix $F_r$ by using the matrix equation

$$r = F_t^{-1}HF_r\, d + Q\,, \qquad (3)$$

wherein Q is a noise vector comprising the noise generated at the transmitter 300, on the radio transmission path 314 and at the receiver 202. In theory, a radio system applying a multiple antenna system and comprising $N_t$ transmitting antennas and $N_r$ receiving antennas, wherein $N_t > 1$ and/or $N_r > 1$, is capable of setting up at most $N_c$ parallel channels, each parallel channel operating as an independent channel. The theoretical maximum number $N_c$ of parallel channels between each transceiver pair is either the number $N_t$ of transmitting antennas or the number $N_r$ of receiving antennas such that the lower one is selected from $N_t$ and $N_r$. For example, if $N_t = 3$ and $N_r = 2$, the maximum number of parallel channels is $N_c = 2$. A parallel channel matrix representing the parallel channels can be presented in the form

$$V = F_t^{-1}HF_r\,. \qquad (4)$$

When the transmit and receive filters are optimized without weighting $G_t$, the parallel channel matrix V comprises, as its diagonal elements, the weight $\sigma_n$ of each parallel channel n, which describes the data transfer capacity of each parallel channel n. As far as the operation of the radio system is concerned, it is preferable that the characteristics, such as data transfer capacity, of the parallel channels can be influenced. The characteristics of the parallel channels can preferably be affected by adjusting e.g. the transmit filter 310 or the receive filter 340, or both. The capacity to be transmitted over parallel channels can preferably be adjusted using the weighting matrix $G_t$, for example.

When the filters 310 and 340 are adjusted, it is often preferable to know at least something about a channel estimate. Particularly in FDD systems, the channel estimate of the radio channel between the transmitter 300 and the receiver 202 is generated at the receiver 202. The channel estimate and the matrix H representing the channel estimate are preferably generated at the control unit 380 of the receiver 202. As far as the generation of a channel estimate is concerned, it is preferable that the receiver 202 is provided with information on the physical radio transmission path between the transmitter 300 and the receiver 202 or about the general characteristics of the radio transmission path. As far as the matrix presentation is concerned, determining a channel estimate means determining at least one matrix element of the channel matrix H.

The matrix elements of the channel matrix H can be estimated using known technology. For example, a WCDMA standard titled "3$^{rd}$ Generation Partnership Project; Technical Specification Group Radio Access Network" discloses channel estimation with a so-called common and/or dedicated pilot signal. In multiple antenna reception, a channel is estimated possibly on several receive channels simultaneously.

In a preferred embodiment of the present solution, at least part of the channel estimate is generated using a signal transmitted from the transmitter 300 to the receiver 202, the signal comprising predetermined information known to the transmitter 300 and the receiver 202. The predetermined information may comprise a sequence which determines the order in time in which the transmitter 300, using each antenna 236, transmits the signal at a previously known, antenna-specific amplitude and phase, and the receiver 202 receives the signal by each antenna 322. In an embodiment, the transmitter 300 transmits at least one training sequence to the receiver 202, the training sequence comprising mutually orthogonal or almost orthogonal training sequence components. In a preferred embodiment of the use of a training sequence, the transmitter 300 transmits a set of mutually orthogonal training sequence components to the receiver 202 by transmit filters 310 known to the receiver. At least part of the channel estimate can then be determined from equation (3). The orthogonality of the training sequence components can be generated e.g. by arranging the transmit filter 310 and the receive filter 340 appropriately. In an embodiment, the orthogonal training sequence components are implemented such that the transmitter 300 transmits a signal $s_k$ by one antenna k of the transmitting antenna array 234 at a time, which signal is received by each antenna m of the receiving antenna array 320 separately; this results in a signal $g_m$. The element $H_{mk}$ of the matrix representing the channel estimate can then be determined from the ratio $g_m/d_k$. If necessary, the transmission and reception are continued until the desired channel estimate parts have been determined. The orthogonality of the training sequence components can also be implemented by encoding the signal directed to the transmitter such that the receiver, knowing the code, is capable of determining the settings of the filters 310 and 340 corresponding with each received signal, and at least part of the channel estimate.

Examine, by way of example, a training sequence implemented by orthogonal training sequence components when $N_t$=4. The transmitter 300 then transmits signals $s_1 = (1,1,1,1)$, $s_2 = (1,-1,1,-1)$, $s_3 = (1,1,-1,-1)$ and $s_4 = (1,-1,-1,1)$ such that the signal $s_1$ is transmitted at a point of time $t_1$, signal $s_2$ at a point of time $t_2$, signal $s_3$ at a point of time $t_3$, and the signal $s_4$ at a point of time $t_4$. This can be interpreted to mean that the transmit filters are selected in four different ways at four different points of time. At each point of time $t_1$, $t_2$, $t_3$ and $t_4$, each receiving antenna 322 receives a signal transmitted at a particular point of time such that a received signal is measured simultaneously by each receiving antenna 322. Next, the receiver 202 is able to generate, as linear combinations of the signals $s_1$, $s_2$, $s_3$ and $s_4$, signals $s'_1=$ (1,0,0,0), $s'_2 = (0,1,0,0)$, $s'_3 = (0,0,1,0)$ and $s'_4 = (0,0,0,1)$, for example, as in a situation wherein each transmitting antenna k had sent signals $s'_1$, $s'_2$, $s'_3$ and $s'_4$ at points of time $t_1$ - $t_4$, each signal being received separately by each receiving antenna 322.

The above-mentioned signal used for channel estimation and comprising previously known information, such as training sequences, can be intended for channel estimation exclusively. The signal may be intended for several users simultaneously, or for one user only. These are exemplified by the above-mentioned common and dedicated pilots of the WCDMA standard. A signal used for channel estimation may also have other functions. A signal intended for channel estimation may be part of the actual data signal but in such a case, the signal intended for channel estimation can be separated from the data signal in terms of time, frequency or code.

An essential step of the present solution is to generate, at the receiver 202, a variable which contains transmit filter information on the transmit filter 310 of the transmitter 300. The variable containing transmit filter information can be generated e.g. such that it is possible to divide the variable into parts whose effects on a channel's data transfer capacity can be separated easily. Each part can then be prioritized based e.g. on the way in which a change in a particular part affects the data transfer capacity of a radio system. When the variable containing transmit filter information on the transmitter 300 has been generated at the receiver 202, the next step is to generate at least part of a change in the variable containing transmit filter information as compared with a value of the variable containing transmit filter information previously transmitted to the receiver 202. Next, the change in the variable containing transmit filter information or a part thereof is transmitted from the receiver 202 to the transmitter 300. In Figure 3, a change in the variable containing transmit filter information or a part thereof is designated by an arrow 390 directed from the receiver 202 to the transmitter 300.

In an embodiment, the effect of the change in the variable containing transmit filter information about the transmitter 300 on the data transfer capacity directed from the transmitter 300 to the receiver 202 is determined at the receiver 202 and, on the basis of the determined effect, the part to be transmitted from the receiver to the transmitter is selected from among the change in the variable containing transmit filter information on the transmitter 300. The part of the change in the transmit filter information can then be selected e.g. to enable the data transfer capacity to be maximized.

In another embodiment, the effect of the change in the variable containing transmit filter information about the transmitter 300 on the number of parallel channels directed from the transmitter 300 to the receiver 202 that are connected is determined at the receiver 202, and the part of the change in the variable containing transmit filter information on the transmitter 300 to be transmitted from the receiver 202 to the transmitter 300 is selected such that a desired number of available parallel channels is achieved.

Let us next view the present solution by means of matrix presentations. In a preferred embodiment of the present solution, at least part of a transmit filter matrix $F_{t,opt}$ containing transmit filter information, at least part of an inverse matrix $F_{r,opt}^{-1}$ of the receive filter matrix representing the receive filter matrix 340, and at least part of a singular value matrix W of the channel matrix H are generated at the receiver 202 by using at least part of the determined channel matrix H and the singular value decomposition

$$H = F_{t,opt} W F_{r,opt}^{-1} . \qquad (5)$$

On its main diagonal, the singular value matrix W comprises the singular values of the channel matrix H, which are the square roots of the eigenvalues of a matrix $H^H H$ . The matrix $F_{r,opt}$ does not necessarily have to be interpreted as an optimised receive filter but $F_{r,opt}$ can be any matrix that fulfils equation (5) with acceptable accuracy. In a preferred embodiment, the numbers of transmitting antennas 236 and receiving antennas 322 are equal, i.e. $N_c = N_t = N_r$, in which case the channel matrix H is a square matrix of dimension $N_c$, and the square roots of the singular values reside on the diagonal of the singular value matrix W.

In the above-described embodiment, the transmit filter matrix $F_{t,opt}$ corresponds with the variable containing transmit filter information. After the transmit filter matrix $F_{t,opt}$ has been generated, a change in the transmit filter matrix or a part thereof is generated at the receiver 202. A part of the transmit filter matrix can be at least one row or column of the matrix, or a matrix element of at least one row or column. The change in the transmit filter matrix or a part thereof can be generated using at least part of the determined transmit filter matrix $F_{t,opt}$ and at least part of a transmit filter matrix $F_{t,ob}$ previously known to the receiver 202.

In a preferred embodiment of the present solution, the receiver 202 stores at least part of the transmit filter matrix $F_{t,ob}$ transmitted to the transmitter 300 by the receiver. After generating the updated transmit filter matrix $F_{t,opt}$, the receiver 202 generates a change between the new and the old transmit filter matrix, which can be e.g. a difference $\Delta F_t = F_{t,opt} - F_{t,ob}$. Next, at least part of the change $\Delta F_t$ in the transmit filter matrix is transmitted from the receiver 202 to the transmitter 300, and a completely or partly updated transmit filter matrix $F'_{t,opt}$ is generated at the transmitter 300 by using at least part of the change $\Delta F_t$ transmitted to the transmitter 300 and the current transmit filter matrix $F_{t,ob}$ of the transmitter 300. If the change in the transmit filter information is presented by the above-described difference between the matrices, for example, a completely or partly updated transmit filter matrix $F'_{t,opt}$ is obtained from the expression $F'_{t,opt} = F_{t,ob} + \Delta F_t$. It is to be noted then that the matrices $F'_{t,opt}$ and $F_{t,opt}$ are not necessarily identical since in another embodiment, only a desired part of the change in the transmit filter information has been transmitted to the transmitter 300, which corresponds with a partial update of the transmit filter information.

The change in the transmit filter matrix can also be presented using a unitary transformation matrix $\Phi$, which fulfils a relation $F_{t,opt} = F_{t,ob} \Phi$. At least part of the matrix $\Phi$ is then generated, the at least part of the matrix $\Phi$ being transmitted from the receiver 202 to the transmitter 300. Next, the updated at least part of the transmit filter matrix $F_{t,opt}$ is generated using the matrix $\Phi$ delivered to the transmitter or a part thereof, at least part of the current transmit filter matrix $F_{t,ob}$ of the transmitter 300 and the equation $F_{t,opt} = F_{t,ob} \Phi$. The above-described method enables the transmit filter information generated at the receiver 202 to be preferably updated at the transmitter 300. If the change is small, which is likely in a slowly changing channel, the change can also be presented in the form $F_{t,opt} = F_{t,ob} + \Pi$, wherein the elements of the matrix $\Pi$ are small.

Another way to utilize the matrix presentation is to determine a matched filter matrix M by means of the channel matrix H or a part thereof by using the expression

$$M = H^H H , \qquad (6)$$

wherein $H^H$ is the Hermitian conjugate of the matrix H. The matched filter matrix M then corresponds with the variable containing transmit filter information. The definition according to equation (6) of the matched filter matrix M is characterized in that the eigenvalues of the matched filter matrix are obtained directly as the squares of the singular values of the channel matrix H. The matched filter matrix M according to definition (6) then also comprises information about the optimised transmit filter matrix $F_{t,opt}$ and the weighting coefficients $\sigma_n$ of the parallel channels as well as about a weighting matrix $G_t$ possibly generated utilizing the same. A matrix $\Delta M$ characterizing the change in the matched filter matrix M is generated at the receiver 202 by using at least part of the determined matched filter matrix M and at least part of a matched filter matrix $M_0$ previously known to the receiver 202. In a preferred embodiment, the change in the matched filter matrix can be presented as a difference $\Delta M = M - M_0$, which in this case corresponds with the change in the variable containing transmit filter information. The change $\Delta M$ in the filter matrix can preferably be presented as the eigenvalue decomposition

$$\Delta M = U_t \bar{D} U_t^{H} , \qquad (7)$$

wherein the matrix D comprises the eigenvalues $\lambda_k$ of the change $\Delta M$ in the filter matrix and the columns in the matrix $U_t$ comprise the eigenvectors $u_{t,k}$ corresponding with the eigenvalues $\lambda_k$; using these designations, equation (6) can be written in the form

$$\Delta M = \begin{bmatrix} u_{t,1}\sqrt{\lambda_1} & u_{t,2}\sqrt{\lambda_2} & \cdots & u_{t,N}\sqrt{\lambda_N} \end{bmatrix} \begin{bmatrix} u^{H}_{t,1}\sqrt{\lambda_1} \\ u^{H}_{t,2}\sqrt{\lambda_2} \\ \vdots \\ u^{H}_{t,N}\sqrt{\lambda_N} \end{bmatrix} . \qquad (8)$$

After eigenvalue decomposition (7) or (8) of the change $\Delta M$ in the filter matrix has been generated, at least one eigenvalue $\lambda_k$ of the matrix $\Delta M$ and at least part of the eigenvector $u_{t,k}$ associated with the particular eigenvalue are transmitted from the receiver 202 to the transmitter 300, the eigenvalue-eigenvector pair being designated by $(\lambda, u)_k$.

In an embodiment of the present solution, at least part of the change in the variable containing transmit filter information, such as part of the matrix $\Delta F_t$ or part of the $(\lambda, u)_k$ pair, is transmitted from the receiver 202 to the transmitter 300. The parts to be transmitted and the order of transmission can then be selected based on the effect of the transmission order on the data transfer capacity of parallel channels or the effect of the transmission order on the number of available parallel channels. In another embodiment, the change in the variable containing transmit filter information is transmitted from the receiver 202 to the transmitter 300 in the order of magnitude of the eigenvalues $\lambda_k$. This is a preferred embodiment especially when the transmitter 300 does not have any previous transmit filter information when, for example, a new radio connection is being set up.

In another embodiment, the effect of the change in the variable containing transmit filter information about the transmitter 300 on the number of available parallel channels directed from the transmitter 300 to the receiver 202 is determined at the receiver 202 and the $(\lambda, u)_k$ pair to be transmitted from the receiver 202 to the transmitter 300 is selected such that a desired number of available parallel channels is achieved.

When at least part of the change in the transmit filter information on the transmitter 300, such as a $(\lambda, u)_k$ pair, has been transmitted from the receiver 202 to the transmitter 300, at least part of the matched filter matrix M is updated at the transmitter 300 by using at least one $(\lambda, u)_k$ pair transmitted to the transmitter 300 by the receiver 202 and at least part of a previous matched filter matrix $M_0$ of the transmitter by using the equation

$$M = M_0 + \sum u_{t,k}\sqrt{\lambda_k}\left(u_{t,k}\sqrt{\lambda_k}\right)^{T} , \qquad (9)$$

wherein the summing comprises the $(\lambda, u)_k$ pairs transmitted from the receiver 202 to the transmitter 300. When the matched filter matrix M of the transmitter 300 has been updated at least once using e.g. equation (9), at least part of the transmit filter matrix $F_{t,opt}$ can be generated at the receiver 300 by using the updated matched filter matrix M and the eigenvalue decomposition

$$M = F_{t,opt}^{-1}\Lambda F_{t,opt} , \qquad (10)$$

wherein A comprises the eigenvalues of the updated matched filter matrix M. Eigenvalue decomposition (10) can also be used while determining a previous matched filter matrix $M_0$ to be used e.g. for updating the matched filter matrix M of equation (9), provided that the transmit filter matrix $F_{t,ob}$ equivalent to the matrix $M_0$ is known to the transmitter 300. The above-described method enables the transmit filter information generated at the receiver 202 to be updated at the transmitter 300 with no need for the transmitter 300 to store several matrices in memory. If the transmit filter information on the transmitter 300 is generated for the first time e.g. after a radio connection has been disconnected, the matched filter matrix previously known to the transmitter 300 and the receiver 202 is $M_0 = 0$, and the updated matched filter matrix M is generated in the above-described manner, using expressions (9) and (10).

Examine the selection of the weighting matrix $G_t$ possibly contained in the transmit filter $F_t$. This can be generated e.g. by using the eigenvalues $\Lambda$ of the updated matched filter matrix M, whose square roots are singular values $\sigma_n$. According to the prior art, the weighting matrix $G_t$ can be selected e.g. based on a so-called water-filling method (I.E. Telatar, "Capacity of multi-antenna gaussian channels", Eur.Trans. Telecomm., vol. 10, no. 6, pp. 585 to 595), which is advantageous if the telecommunication system allows several modulation alphabets to be used simultaneously. When only one modulation alphabet is used, a so-called inverse water-filling (J. Saltz, Digital transmission over cross-coupled linear channels", Bell Labs Tech. J. July-Aug. 1985) can be applied, which comprises selecting some of the strongest parallel virtual data transfer channels.

In an embodiment, a correlation matrix C can be generated from the measured channel information to describe the correlation between the transmitting and receiving elements. This requires a channel estimate to be obtained from more than one measuring occasion. The covariance of measured matrix elements of the channel matrix H is calculated utilizing these several measurement results by calculating e.g. the expectation values of the products of separate matrix elements. A reference titled "Wireless Communication using dual antenna arrays" by Da-Shan Shiu, Kluwer Academic Publishers, Boston 2000, discusses the calculation of a channel correlation matrix. In the wireless communication systems, no correlation exists between the transmitting antennas and the receiving antennas; the highest correlation occurs between different transmitting antennas or between different receiving antennas. The correlation between the transmitting antennas can then be presented as a matrix $C_t$, and the correlation between the receive matrices can be presented as a matrix $C_r$. The receiver 202 measures at least some of these matrices. In a preferred embodiment, the information thus measured is utilized when generating as independent parallel data transfer channels as possible. If the information about the transmit filter matrix transmitted to the transmitter 300 by the receiver 202 is based directly on the channel matrix H, at least a portion of the matrices $A_r$ and $A_t$ for which $C_t = A_t^H A_t$ and $C_r = A_r^H A_r$ are valid are preferably generated. These matrices can be called long-term transmit and receive filters. These parts enable at least part of a matrix $\tilde{H} = A_t^H H A_r$ to be generated. The transmit and receive filters and the change therein are now calculated from this matrix in a similar manner to that used in the above-disclosed embodiments when they were calculated from the matrix H. If the information on the transmit filter matrix transmitted to the transmitter 300 by the receiver 202 is based on the matched filter M, at least part of a matrix $\tilde{M} = H_t^H C_r H C_t$ is generated using correlation matrices. The transmit and receive filters and the change therein are now calculated from this matrix in a similar manner to that used in the above-described embodiments when they were calculated from the matrix M.

In an embodiment, transmit and receive filters can be calculated from channel information measured at more than one point of time by using a so-called independent components analysis.

The change in the transmit filter information on the transmitter 300 can be transmitted from the receiver 202 to the transmitter by using prior art methods. The above-described WCDMA standard describes so-called feedback-mode signalling on so-called control channels of the uplink. It is obvious to one skilled in the art that corresponding logical channel structures can be used for transmitting transmit filter information described in the present invention.

In an embodiment, at predetermined intervals or possibly at the request of the transmitter 300, the receiver 202 transmits information about a change in the channel matrix H, matched filter matrix M, transmit filter $F_t$ and/or the long-term filters $A_r$ and/or $A_t$ or corresponding correlation matrices to the transmitter 300. Preferably, this information can be transmitted e.g. on a control channel of the uplink. In another preferred embodiment, at predetermined intervals or possibly at the request of the transmitter, the receiver 202 also transmits information concerning the main part of the channel matrix H, matched filter matrix M, transmit filter $F_t$ and/or the long-term filters $A_r$ and/or $A_t$ or corresponding correlation matrices. Preferably, this main part, which is transmitted more seldom, comprises information on almost the entire matrix and is possibly protected by an error correction code. Preferably, this information can be transmitted in packet-switched form e.g. on a common packet channel CPCH of the uplink, or on a channel RACH randomly used.

In a preferred embodiment of the present solution, the change in the variable containing transmit filter information to be transmitted from the receiver 202 to the transmitter 300 is quantised using e.g. a method according to the radio system standard. The above-described WCDMA standard discloses two methods: Mode 1 and Mode 2. Alternatively, vector quantising can be used. A publication titled "Closed loop transmit diversity for FDD WCDMA systems" by J. Hämäläinen, R. Wichman, Asilomar conference on signals, systems and computers, 2000, vol. 1, pp. 111 to 115, describes other methods for selecting quantising. The bits obtained on the basis of quantising are then transmitted to a transmitter on a radio path.

Quantising involves a rounding error. The rounding error is part of the concept "filter matrix part" used above.

Examine errors and error correction possibly occurred in the transmit filter information to be transmitted. In the prior art verification systems, the above-mentioned WCDMA standard comprises examining the estimates of so-called dedicated channels, which are thus channel estimates from the filtered channels, and the estimates of common pilot channels. On the basis of the difference therebetween, the receiver 202 is often able to infer whether the transmitter 300 has used a correct transmit filter or whether an error has occurred in the delivery of transmit filter information. Preferably, if the receiver 202 recognizes that an error has occurred, the error can be inferred from the above-mentioned channel estimates, and the erroneous information can be taken into account while determining future variables indicating a change in a channel. In an alternative embodiment, at predetermined intervals or possibly at the request of the receiver 202, the transmitter 300 transmits information on the transmit filter used by the transmitter. This information enables the receiver 202 to infer whether an error has occurred in the delivery of the transmit filter information. Preferably, this can be implemented by transmitting e.g. cyclic redundancy checking bits generated from the description of the transmit filter known to the transmitter 300 and the receiver 202 by using the bits. If the receiver 202 detects that the transmitter 300 uses an erroneous filter, the receiver 202 may either try to estimate the error as described above or to transmit a nulling command to the transmitter 300. After the nulling command, the transmitter will no longer use the old information on the channel. The receiver 202 delivers information on the transmit filter to the transmitter 300 by using e.g. one of the above-mentioned embodiments.

Examine the embodiments of the invention in connection with channels wherein echoes occur. The channel matrix H can be presented as a matrix which, on its block diagonal, comprises single channel matrices corresponding with different delays. This matrix cannot be diagonalized using transmit and receive filters. In a preferred embodiment, the filters are selected to enable the data transfer capacity of a channel to be maximized. Depending on the structure of the receiver, this maximization can be carried out in different ways. In the case of one receiving antenna, the problem is discussed in a publication titled "Feedback Schemes for FDD WCDMA systems in multipath environment" by J. Hämäläinen and R. Wichman, VTC Spring 2001, vol. 1, pp. 238 to 242. Alternatively, a so-called independent components analysis can be used. It is obvious to one skilled in the art that similar methods can be utilized in multiple antenna reception. The inventive solution comprises forwarding parts of a change in a transmit filter.

The singular value decomposition disclosed in equation (5) and the eigenvalue decomposition disclosed in equations (7) and (10) can be implemented by numerical algorithms according to the prior art that are typically iterative and based on the unitary matrices found in equations (5), (7) and (10), such as successive operations on the filter matrices $F_{t,opt}$ and $F_{r,opt}$ and the eigenvalue matrix $U_t$, such as Jacobian rotations. Every time, the successive operations then result in a more accurate singular value decomposition or eigenvalue decomposition. As far as calculation is concerned, numerical iteration is relatively heavy, and a reduction in the number of iteration cycles enables the processor power consumption e.g. of the terminal equipment 202 to be reduced. However, the reduction in the number of iteration cycles results in inaccuracy of the unitary matrices obtained from the singular value decomposition or eigenvalue decomposition, such as the filter matrices $F_{t,opt}$ and $F_{r,opt}$ and the eigenvalue matrix $U_t$, and in inaccuracy of the singular values and eigenvalues associated with the above-mentioned unitary matrices. In such a case, the iteration can more often than not be interrupted when the inaccuracy caused by an interrupted iteration to the above-mentioned unitary matrices and the singular values and eigenvalues associated therewith is covered with other sources of error. Such other sources of error include e.g. an error caused by quantising of transmit filter information, and the signal-to-noise ratio of the signals to be transmitted.

In a preferred embodiment of the present solution, the iteration of the singular value decomposition or eigenvalue decomposition is interrupted when a desired accuracy of the singular value decomposition or eigenvalue decomposition has been achieved. The desired accuracy can be determined e.g. by a model error in a channel estimate or a restricted number of bits.

In another embodiment, the effect of the inaccuracy of the singular value decomposition or eigenvalue decomposition on the inaccuracy of each parallel channel is determined at the receiver 202, which can be carried out e.g. using equation (3). In addition, SINR (Signal-to-Interference and Noise Ratio) estimates for each parallel channel are generated at the receiver 202, and the iteration of the singular value decomposition or eigenvalue decomposition is interrupted at the inaccuracy determined by an SINR estimate. An SINR estimate can be generated e.g. at the control unit 380 of the terminal equipment 202.

In another embodiment, the effect of the inaccuracy of the singular value decomposition or eigenvalue decomposition on the accuracy of the change in the variable containing transmit filter information on the transmitter 300 is determined at the receiver 202 and the determined change in the variable containing transmit filter information is quantised by the quantising method used. Furthermore, the inaccuracy caused by the quantising method used to the accuracy of the change in the variable containing transmit filter information is determined, and the iteration of the singular value decomposition or eigenvalue decomposition is interrupted at the inaccuracy determined by the quantising method. In connection with interrupting the iteration, it is to be noted that the inaccuracy caused by interrupting the iteration of the variables to be quantised, such as the eigenvalues $\lambda_k$, does not result in erroneous quantising of the variable. The change in each variable must then be monitored during iteration in order to ensure that the variable becomes rounded in a correct direction.

In a preferred embodiment of the present solution, eigenvalue decompositions (7) and (10) can be generated by diagonalizing the matrices $\Delta M$ and $M$ on the left of equations (7) and (10), the result of the diagonalization being the eigenvalues and eigenvector matrices of the above-mentioned matrices. Diagonalization can be carried out as unitary matrix operations on the matrices found in equations (7) and (10) to be diagonalized. The diagonalization can then be carried out in an exact manner if the dimension of a matrix to be diagonalized is less than or equal to 4. In practice, an analytic solution is preferred when the dimension of a matrix to be diagonalized is 2. In a preferred embodiment of the present solution, the matrices ΔM and M are diagonalized approximatively at the receiver 202 and the transmitter 300 by utilizing a perturbation theory known per se, which is used e.g. in quantum mechanics for approximatively determining the eigenvalues and eigenvectors of matrices.

Although the invention has been described above with reference to the example according to the accompanying drawings, it is obvious that the invention is not restricted thereto but can be modified in many ways within the scope of the inventive idea disclosed in the claims.

**Claims**

1. A data transfer method in a radio system comprising a transmitter (300) comprising at least one antenna array (234) comprising at least two antennas (236), and at least one receiver (202) comprising at least one antenna array (320) comprising at least two antennas (322), the radio system comprising a physical radio channel between the transmitter (300) and the receiver (202); the method comprising
   filtering, by means of transmit filter information, a signal to be transmitted via the antennas (236) of the antenna array (234) of the transmitter (300); and
   generating, at the receiver (202), a variable which contains transmit filter information on the transmitter (300), **characterized by**
   generating, at the receiver (202), at least part of a change in the variable containing transmit filter information on the transmitter (300);
   transmitting at least part of the change in the variable containing transmit filter information on the transmitter (300) from the receiver (202) to the transmitter (300); and
   updating, at the transmitter (300), the transmit filter information on the transmitter (300) on the basis of the received change in the variable containing transmit filter information.

2. A method as claimed in claim 1, **characterized by** generating, at the receiver (202), at least part of the change in the variable containing transmit filter information on the transmitter (300) as compared with a value of the variable containing transmit filter information previously transmitted to the receiver (202).

3. A method as claimed in claim 1, **characterized by** transmitting the signal to the receiver (202) by the transmitter (300) via the physical radio channel;
   determining, at the receiver (202), at least part of a channel estimate of the physical channel on the basis of the received signal;
   determining, at the receiver (202), at least part of the change in the variable containing transmit filter information on the transmitter (300) by using at least part of the determined channel estimate.

4. A method as claimed in claim 1, **characterized by** transmitting the signal to the receiver (202) by the transmitter (300) via the physical radio channel, the signal comprising predetermined information,
   determining, at the receiver (202), at least part of a channel estimate of the physical channel by means of the predetermined information contained in the received signal;
   determining, at the receiver (202), at least part of the change in the variable containing transmit filter information on the transmitter (300) by using at least part of the determined channel estimate.

5. A method as claimed in claim 1, **characterized by** transmitting at least one training sequence comprising at least one previously known symbol sequence to the receiver (202) by the transmitter (300);
   determining, at the receiver (202), at least one matrix element of a channel matrix H by means of the received at least one training sequence;
   generating, at the receiver (202), at least part of a transmit filter matrix $F_{t,opt}$ which contains transmit filter information, at least part of an inverse matrix $F_{r,opt}^{-1}$ of a receive filter matrix which contains a receive filter (340), and at least part of a singular value matrix W of the channel matrix H by using at least part of the determined channel matrix H and the singular value decomposition

$$H = F_{t,opt} W F_{r,opt}^{-1};$$

generating, at the receiver (202), the change in the transmit filter matrix representing the transmit filter information by using at least part of the determined transmit filter matrix $F_{t,opt}$ and at least part of a transmit filter matrix previously known to the receiver (202);

transmitting at least part of the matrix which contains the change in the transmit filter information from the receiver (202) to the transmitter (300);

updating, at the transmitter (300), at least part of the transmit filter matrix by using at least part of the change in the transmit filter matrix transmitted to the transmitter (300) by the receiver (200) and at least part of a transmit filter matrix previously known to the transmitter (300).

6. A method as claimed in claim 1, **characterized by** transmitting at least one training sequence comprising at least one previously known symbol sequence to the receiver (200) by the transmitter (300);

determining, at the receiver (202), at least one matrix element of the channel matrix H by means of the received at least one training sequence;

generating a matched filter matrix M from the channel matrix H by using the equation

$$M = H^H H \;;$$

generating, at the receiver (202), a matrix $\Delta M$ characterizing a change in the matched filter matrix M by using at least part of the determined matched filter matrix M and at least part of a matched filter matrix $M_0$ previously known to the receiver (202);

generating, at the receiver (300), at least part of an eigenvalue matrix D of the matrix $\Delta M$ characterizing the change in the matched filter matrix and at least part of the above-generated eigenvalue matrix D from a corresponding eigenvector matrix $U_t$ by using the eigenvalue decomposition

$$\Delta M = U_t \overline{D} U_t^{H} \;;$$

transmitting at least one eigenvalue $\lambda_k$ of the matrix $\Delta M$ and at least part of an eigenvector $U_{t,k}$ associated with said eigenvalue from the receiver (202) to the transmitter (300);

updating, at the transmitter (300), at least part of the matched filter matrix M by using at least one eigenvalue $\lambda_k$ of the matrix $\Delta M$ characterizing the change in the matched filter matrix and transmitted to the transmitter (300) by the receiver (202), at least part of the eigenvector $u_{t,k}$ associated with said eigenvalue and at least part of a previous matched filter matrix $M_0$ of the transmitter by using the equation

$$M = M_0 + u_{t,k} \sqrt{\lambda_k} \left( u_{t,k} \sqrt{\lambda_k} \right)^T \;;$$

updating, at the transmitter (300), at least part of the transmit filter matrix $F_{t,opt}$ containing transmit filter information by using the updated matched filter matrix M and $\Lambda$ eigenvalue decomposition

$$M = F_{t,opt}^{-1} \Lambda F_{t,opt} \;,$$

wherein $\Lambda$ comprises the eigenvalues of the matched filter matrix M.

7. A method as claimed in one of claims 5 and 6, **characterized by**

generating, at the receiver (202) and the transmitter (300), singular value decompositions or eigenvalue decompositions by using numerical iteration; and

interrupting the iteration of a singular value decomposition or eigenvalue decomposition at a desired accuracy of singular values or eigenvalues.

8. A method as claimed in one of claims 5 and 6, **characterized by**

generating, at the receiver (202), singular value decompositions or eigenvalue decompositions by using numerical iteration;

determining, at the receiver (202), the effect of the inaccuracy of a singular value decomposition or eigenvalue decomposition on the inaccuracy of each parallel channel;

generating, at the receiver (202), SINR estimates for each parallel channel;

interrupting, at the receiver (202), the iteration of the singular value decomposition or eigenvalue decomposition at the inaccuracy determined by an SINR estimate.

**9.** A method as claimed in one of claims 5 and 6, **characterized by**

generating a singular value decomposition or eigenvalue decomposition at a predetermined accuracy by using numerical iteration;

determining the effect of the inaccuracy of the singular value decomposition or eigenvalue decomposition on the accuracy of the change in the variable containing transmit filter information on the transmitter (300);

quantising the determined change in the variable containing transmit filter information by the quantising method used;

determining the inaccuracy caused by the quantising method used on the accuracy of the change in the variable containing transmit filter information; and

interrupting the iteration of the singular value decomposition or eigenvalue decomposition at the inaccuracy determined by the quantising method such that the change in the variable containing transmit filter information becomes rounded in a correct direction.

**10.** A method as claimed in one of claims 5 and 6, **characterized by**

generating, at the receiver (202) and the transmitter (300), singular value decompositions or an eigenvalue decomposition by means of a perturbation theory.

**11.** A method as claimed in claim 1, **characterized by**

generating, at the receiver (202), at least part of the change in the variable containing transmit filter information on the transmitter (300);

quantising at least part of the change in the variable containing transmit filter information on the transmitter (300); and

transmitting at least part of the quantised change in the variable containing transmit filter information on the transmitter (300) from the receiver (202) to the transmitter (300).

**12.** A method as claimed in claim 1,**characterized by**

generating, at the receiver (202), at least part of the change in the variable containing transmit filter information on the transmitter (300);

quantising at least part of the change in the variable containing transmit filter information on the transmitter (300) by using a Mode 1 standard; and

transmitting at least part of the quantised change in the variable containing transmit filter information on the transmitter (300) from the receiver (202) to the transmitter (300).

**13.** A method as claimed in claim 1, **characterized by**

generating, at the receiver (202), at least part of the change in the variable containing transmit filter information on the transmitter (300);

quantising at least part of the change in the variable containing transmit filter information on the transmitter (300) by using a Mode 2 standard; and

transmitting at least part of the quantised change in the variable containing transmit filter information on the transmitter (300) from the receiver (202) to the transmitter (300).

**14.** A method as claimed in claim 1, **characterized by**

determining, at the receiver (202), the effect of the change in the variable containing transmit filter information on the transmitter (300) on the data transfer capacity directed from the transmitter (300) to the receiver (202), and

selecting, on the basis of the determined effect, the part of the change in the variable containing transmit filter information on the transmitter (300) to be transmitted from the receiver (202) to the transmitter (300).

**15.** A method as claimed in claim 1, **characterized by**

determining, at the receiver (202), the effect of the change in the variable containing transmit filter information on the transmitter (300) on the data transfer capacity directed from the transmitter (300) to the receiver (202), and

selecting the part of the change in the variable containing transmit filter information on the transmitter (300) to be transmitted from the receiver (202) to the transmitter (300) in order to enable said data transfer capacity to be maximized.

**16.** A method as claimed in claim 1, **characterized by**
determining, at the receiver (202), the effect of the change in the variable containing transmit filter information about the transmitter (300) on the number of available parallel channels; and
selecting the part of the change in the variable containing transmit filter information on the transmitter (300) to be transmitted from the receiver (202) to the transmitter (300) such that a desired number of available parallel channels is achieved.

**17.** A radio system comprising a transmitter (300) comprising at least one antenna array (234) comprising at least two antennas (236), and at least one receiver (202) comprising at least one antenna array (320) comprising at least two antennas (322), the radio system comprising a physical radio channel between the transmitter (300) and the receiver (202); the radio system comprising
means (208, 212) for filtering, by means of transmit filter information, a signal to be transmitted via the antennas (236) of the antenna array (234) of the transmitter (300); and
means (380) for generating, at the receiver (202), a variable which contains transmit filter information on the transmitter (300), **characterized in that**
the receiver (202) comprises means (380) for generating at least part of a change in the variable containing transmit filter information on the transmitter (300);
the receiver (202) is arranged to transmit at least part of the change in the variable containing transmit filter information on the transmitter (300) from the receiver (202) to the transmitter (300); and
the means (208, 212) for filtering are arranged to update the transmit filter information on the transmitter (300) on the basis of the received change in the variable containing transmit filter information.

**18.** A radio system as claimed in claim 17, **characterized in that**
the receiver (202) comprises means (380) for generating at least part of the change in the variable containing transmit filter information on the transmitter (300) as compared with a value of the variable containing transmit filter information previously transmitted to the receiver (202).

**19.** A radio system as claimed in claim 17, **characterized in that**
the transmitter (300) comprises means (236) for transmitting the signal to the receiver via the physical radio channel;
the receiver (202) comprises means (380) for determining at least part of a channel estimate of the physical channel on the basis of the received signal;
the receiver (202) comprises means (380) for determining at least part of the change in the variable containing transmit filter information on the transmitter (300) by using at least part of the determined channel estimate.

**20.** A radio system as claimed in claim 17, **characterized in that**
the transmitter (300) comprises means (236) for transmitting the signal to the receiver (202) via the physical radio channel, the signal comprising predetermined information;
the means (380) for generating, at the receiver (202), a variable containing transmit filter information on the transmitter (300) are arranged to determine at least part of the channel estimate of the physical channel by means of the predetermined information contained in the received signal;
the means (380) for generating, at the receiver (202), a variable containing transmit filter information on the transmitter (300) are arranged to determine at least part of the change in the variable containing transmit filter information on the transmitter (300) by using at least part of the determined channel estimate.

**21.** A radio system as claimed in claim 17, **characterized in that**
the transmitter (300) is arranged to transmit at least one training sequence comprising at least one previously known symbol sequence to the receiver (202);
the means (380) for generating, at the receiver (202), a variable containing transmit filter information on the transmitter (300) are arranged to determine at least one matrix element of a channel matrix H by means of the received at least one training sequence;
the means (380) for generating, at the receiver (202), a variable containing transmit filter information on the transmitter (300) are arranged to generate at least part of a transmit filter matrix $F_{t,opt}$ which contains transmit filter information, at least part of an inverse matrix $F_{r,opt}^{-1}$ of a receive filter matrix which contains a receive filter (340), and at least part of a singular value matrix W of the channel matrix H by using at least part of the determined channel matrix H and the singular value decomposition

$$H = F_{t,opt} W F_{r,opt}^{-1} \, ;$$

the means (380) for generating, at the receiver (202), a variable containing transmit filter information on the transmitter (300) are arranged to generate a change in a transmit filter matrix representing the transmit filter information by using at least part of the determined transmit filter matrix $F_{t,opt}$ and at least part of a transmit filter matrix previously known to the receiver (202);

the receiver (202) is arranged to transmit at least part of the matrix containing the change in the transmit filter information to the transmitter (300);

the means (208, 212) for filtering, at the transmitter (300), are arranged to update at least part of the transmit filter matrix by using at least part of the change in the transmit filter matrix transmitted to the transmitter (300) by the receiver (200) and at least part of a transmit filter matrix previously known to the transmitter (300).

22. A radio system as claimed in claim 17, **characterized in that**

the transmitter (300) is arranged to transmit at least one training sequence comprising at least one previously known symbol sequence to the receiver (202);

the means (380) for generating, at the receiver (202), a variable containing transmit filter information on the transmitter (300) are arranged to determine at least one matrix element of the channel matrix H by means of the received at least one training sequence;

the means (380) for generating, at the receiver (202), a variable containing transmit filter information on the transmitter (300) are arranged to generate a matched filter matrix M from the channel matrix H by using the equation

$$M = H^H H \, ;$$

the means (380) for generating, at the receiver (202), a variable containing transmit filter information on the transmitter (300) are arranged to generate a matrix $\Delta M$ characterizing the change in the matched filter matrix M by using at least part of the determined matched filter matrix M and at least part of a matched filter matrix $M_0$ previously known to the receiver (202);

the means (380) for generating, at the receiver (202), a variable containing transmit filter information on the transmitter (300) are arranged to generate at least part of an eigenvalue matrix D of the matrix $\Delta M$ characterizing the change in the matched filter matrix and at least part of the above-generated eigenvalue matrix D from a corresponding eigenvector matrix $U_t$ by using the eigenvalue decomposition

$$\Delta M = U_t D U_t^H \, ;$$

the receiver (202) is arranged to transmit at least one eigenvalue $\lambda_k$ of the matrix $\Delta M$ and at least part of an eigenvector $u_{t,k}$ associated with said eigenvalue to the transmitter (300);

the means (208, 212) for filtering, at the transmitter (300), are arranged to update at least part of the matched filter matrix M by using at least one eigenvalue $\lambda_k$ of the matrix $\Delta M$ characterizing the change in the matched filter matrix and transmitted to the transmitter (300) by the receiver (202), at least part of the eigenvector $u_{t,k}$ associated with said eigenvalue, and at least part of a previous matched filter matrix $M_0$ of the transmitter by using the equation

$$M = M_0 + u_{t,k} \sqrt{\lambda_k} \left( u_{t,k} \sqrt{\lambda_k} \right)^T \, ;$$

the means (208, 212) for filtering, at the transmitter (300), are arranged to update at least part of the transmit filter matrix $F_{t,opt}$ containing transmit filter information by using the updated matched filter matrix M and A eigenvalue decomposition

$$M = F_{t,opt}^{-1} \Lambda F_{t,opt} \, ,$$

wherein A comprises the eigenvalues of the matched filter matrix M.

**23.** A radio system as claimed in one of claims 21 and 22, **characterized in that**

the means (380) for generating, at the receiver (202), a variable containing transmit filter information on the transmitter (300) and the means (208, 212) for filtering, at the transmitter (300), are arranged to generate singular values decompositions or eigenvalue decompositions by using numerical iteration; and

the means (380) for generating, at the receiver (202), a variable containing transmit filter information on the transmitter (300) and the means (208, 212) for filtering, at the transmitter (300), are arranged to interrupt the iteration of a singular value decomposition or eigenvalue decomposition at a desired accuracy of singular values or eigenvalues.

**24.** A radio system as claimed in one of claims 21 and 22, **characterized in that**

the means (380) for generating, at the receiver (202), a variable containing transmit filter information on the transmitter (300) are arranged to generate singular value decompositions or eigenvalue decompositions by using numerical iteration;

the means (380) for generating, at the receiver (202), a variable containing transmit filter information on the transmitter (300) are arranged to determine the effect of the inaccuracy of a singular value decomposition or eigenvalue decomposition on the inaccuracy of each parallel channel;

the means (380) for generating, at the receiver (202), a variable containing transmit filter information on the transmitter (300) are arranged to generate SINR estimates for each parallel channel;

the means (380) for generating, at the receiver (202), a variable containing transmit filter information on the transmitter (300) are arranged to interrupt the iteration of the singular value decomposition or eigenvalue decomposition at the inaccuracy determined by an SINR estimate.

**25.** A radio system as claimed in one of claims 21 and 22, **characterized in that**

the means (380) for generating, at the receiver (202), a variable containing transmit filter information on the transmitter (300) are arranged to generate a singular value decomposition or eigenvalue decomposition at a predetermined accuracy by using numerical iteration;

the means (380) for generating, at the receiver (202), a variable containing transmit filter information on the transmitter (300) are arranged to determine the effect of the inaccuracy of the singular value decomposition or eigenvalue decomposition on the accuracy of the change in the variable containing transmit filter information on the transmitter (300);

the means (380) for generating, at the receiver (202), a variable containing transmit filter information on the transmitter (300) are arranged to quantise the determined change in the variable containing transmit filter information by the quantising method to be used;

the means (380) for generating, at the receiver (202), a variable containing transmit filter information on the transmitter (300) are arranged to determine the inaccuracy caused by the quantising method used to the accuracy of the change in the variable containing transmit filter information; and

the means (380) for generating, at the receiver (202), a variable containing transmit filter information on the transmitter (300) are arranged to interrupt the iteration of the singular value decomposition or eigenvalue decomposition at the inaccuracy determined by the quantising method such that the change in the variable containing transmit filter information becomes rounded in a correct direction.

**26.** A radio system as claimed in one of claims 21 and 22, **characterized in that**

the means (380) for generating, at the receiver (202), a variable containing transmit filter information on the transmitter (300) and the means (208, 212) at the transmitter (300) are arranged to generate a singular value decomposition or eigenvalue decomposition by means of a perturbation theory.

**27.** A radio system as claimed in claim 17, **characterized in that**

the means (380) for generating, at the receiver (202), a variable containing transmit filter information on the transmitter (300) are arranged to generate at least part of the change in the variable containing transmit filter information on the transmitter (300);

the means (380) for generating, at the receiver (202), a variable containing transmit filter information on the transmitter (300) are arranged to quantise at least part of the change in the variable containing transmit filter information on the transmitter (300); and

the receiver (202) is arranged to transmit at least part of the quantised change in the variable containing transmit filter information on the transmitter (300) to the transmitter (300).

**28.** A radio system as claimed in claim 17, **characterized in that**

the means (380) for generating, at the receiver (202), a variable containing transmit filter information on the transmitter (300) are arranged to generate at least part of the change in the variable containing transmit filter information on the transmitter (300);

the means (380) for generating, at the receiver (202), a variable containing transmit filter information on the transmitter (300) are arranged to quantise at least part of the change in the variable containing transmit filter information on the transmitter (300) by using a Mode 1 standard; and

the receiver (202) is arranged to transmit at least part of the quantised change in the variable containing transmit filter information on the transmitter (300) to the transmitter (300).

29. A radio system as claimed in claim 17, **characterized in that**

the means (380) for generating, at the receiver (202), a variable containing transmit filter information on the transmitter (300) are arranged to generate at least part of the change in the variable containing transmit filter information on the transmitter (300);

the means (380) for generating, at the receiver (202), a variable containing transmit filter information on the transmitter (300) are arranged to quantise at least part of the change in the variable containing transmit filter information on the transmitter (300) by using a Mode 2 standard; and

the receiver (202) is arranged to transmit at least part of the quantised change in the variable containing transmit filter information on the transmitter (300) to the transmitter (300).

30. A radio system as claimed in claim 17, **characterized in that**

the means (380) for generating, at the receiver (202), a variable containing transmit filter information on the transmitter (300) are arranged to determine the effect of the change in the variable containing transmit filter information on the transmitter (300) on the data transfer capacity directed from the transmitter (300) to the receiver (202), and

the means (380) for generating, at the receiver (202), a variable containing transmit filter information on the transmitter (300) are arranged to select, on the basis of the determined effect, the part of the change in the variable containing transmit filter information on the transmitter (300) to be transmitted from the receiver (202) to the transmitter (300).

31. A radio system as claimed in claim 17, **characterized in that**

the means (380) for generating, at the receiver (202), a variable containing transmit filter information on the transmitter (300) are arranged to determine the effect of the change in the variable containing transmit filter information on the transmitter (300) on the data transfer capacity directed from the transmitter (300) to the receiver (202), and

the means (380) for generating, at the receiver (202), a variable containing transmit filter information on the transmitter (300) are arranged to select the part of the change in the variable containing transmit filter information on the transmitter (300) to be transmitted from the receiver (202) to the transmitter (300) in order to enable said data transfer capacity to be maximized.

32. A radio system as claimed in claim 17, **characterized in that**

the means (380) for generating, at the receiver (202), a variable containing transmit filter information on the transmitter (300) are arranged to determine the effect of the change in the variable containing transmit filter information about the transmitter (300) on the number of available parallel channels; and

the means (380) for generating, at the receiver (202), a variable containing transmit filter information on the transmitter (300) are arranged to select the part of the change in the variable containing transmit filter information on the transmitter (300) to be transmitted from the receiver (202) to the transmitter (300) such that a desired number of available parallel channels is achieved.

**Patentansprüche**

1. Datentransferverfahren in einem Funksystem mit einem Sender (300), der mindestens ein Antennenfeld (234) aufweist, welches mindestens zwei Antennen (236) aufweist, und mindestens einem Empfänger (202), der mindestens ein Antennenfeld (320) aufweist, welches mindestens zwei Antennen (322) aufweist, wobei das Funksystem einen physikalischen Funkkanal zwischen dem Sender (300) und dem Empfänger (202) umfasst, und wobei das Verfahren Folgendes umfasst:

Filtern eines über die Antennen (236) des Antennenfeldes (234) des Senders (300) zu sendenden Signals mit Hilfe von Sendefilterinformationen und

am Empfänger (202): Generieren einer Variablen, die Sendefilterinformationen über den Sender (300) enthält, **gekennzeichnet durch**:

am Empfänger (202): Generieren mindestens eines Teils einer Änderung der Variablen, die Sendefilterinformationen über den Sender (300) enthält,

Senden mindestens eines Teils der Änderung der Variablen, die Sendefilterinformationen über den Sender (300) enthält, vom Empfänger (202) an den Sender (300) und
am Sender (300): Aktualisieren der Sendefilterinformationen über den Sender (300) auf Basis der empfangenen Änderung der Variablen, die Sendefilterinformationen enthält.

2. Verfahren nach Anspruch 1, **gekennzeichnet durch**: am Empfänger (202): Generieren mindestens eines Teils der Änderung der Variablen, die Sendefilterinformationen über den Sender (300) enthält, im Vergleich zu einem zuvor an den Empfänger (202) gesendeten Wert der Variablen, die Sendefilterinformationen enthält.

3. Verfahren nach Anspruch 1, **gekennzeichnet durch** Senden des Signals **durch** den Sender (300) über den physikalischen Funkkanal an den Empfänger (202),
am Empfänger (202): Bestimmen mindestens eines Teils einer Kanalschätzung für den physikalischen Kanal auf Basis des empfangenen Signals,
am Empfänger (202): Bestimmen mindestens eines Teils der Änderung der Variablen, die Sendefilterinformationen über den Sender (300) enthält, **durch** Benutzen mindestens eines Teils der bestimmten Kanalschätzung.

4. Verfahren nach Anspruch 1, **gekennzeichnet durch** Senden des Signals **durch** den Sender (300) über den physikalischen Funkkanal an den Empfänger (202), wobei das Signal vorbestimmte Informationen umfasst,
am Empfänger (202): Bestimmen mindestens eines Teils einer Kanalschätzung für den physikalischen Kanal mit Hilfe der in dem empfangenen Signal enthaltenen vorbestimmten Informationen,
am Empfänger (202): Bestimmen mindestens eines Teils der Änderung der Variablen, die Sendefilterinformationen über den Sender (300) enthält, **durch** Benutzen mindestens eines Teils der bestimmten Kanalschätzung.

5. Verfahren nach Anspruch 1, **gekennzeichnet durch** Senden mindestens einer Trainingssequenz, die mindestens eine zuvor bekannte Symbolsequenz umfasst, **durch** den Sender (300) an den Empfänger (202),
am Empfänger (202): Bestimmen mindestens eines Matrixelements einer Kanalmatrix H mit Hilfe der mindestens einen empfangenen Trainingssequenz,
am Empfänger (202): Generieren mindestens eines Teils einer Sendefiltermatrix $F_{t,opt}$, die Sendefilterinformationen enthält, mindestens eines Teils einer inversen Matrix $F_{r,opt}^{-1}$ einer Empfangsfiltermatrix, die einen Empfangsfilter (340) enthält, und mindestens eines Teils einer Singulärwertmatrix $W$ der Kanalmatrix H unter Verwendung mindestens eines Teils der bestimmten Kanalmatrix $H$ und der Singulärwertzerlegung

$$H \ = \ F_{t,opt} \ W \ F_{r,opt}^{-1},$$

am Empfänger (202): Generieren der Änderung der Sendefiltermatrix, die die Sendefilterinformationen darstellt, unter Benutzung mindestens eines Teils der bestimmten Sendefiltermatrix $F_{t,opt}$ und mindestens eines Teils einer dem Empfänger (202) zuvor bekannten Sendefiltermatrix,
Senden mindestens eines Teils der Matrix, die die Änderung der Sendefilterinformationen enthält, vom Empfänger (202) an den Sender (300),
am Sender (300): Aktualisieren mindestens eines Teils der Sendefiltermatrix **durch** Benutzen mindestens eines Teils der von dem Empfänger (200) an den Sender (300) gesendeten Änderung der Sendefiltermatrix und mindestens eines Teils einer dem Sender (300) zuvor bekannten Sendefiltermatrix.

6. Verfahren nach Anspruch 1, **gekennzeichnet durch** Senden mindestens einer Trainingssequenz, die mindestens eine zuvor bekannte Symbolsequenz umfasst, **durch** den Sender (300) an den Empfänger (200),
am Empfänger (202): Bestimmen mindestens eines Matrixelements der Kanalmatrix $H$ mit Hilfe der mindestens einen empfangenen Trainingssequenz,
Generieren einer angepassten Filtermatrix $M$ aus der Kanalmatrix $H$ **durch** Benutzen der Gleichung

$$M \ = \ H^{H}H,$$

am Empfänger (202): Generieren einer Matrix $\Delta M$, die eine Änderung der angepassten Filtermatrix $M$ **kennzeichnet,**

**durch** Benutzen mindestens eines Teils der bestimmten angepassten Filtermatrix $M$ und mindestens eines Teils einer dem Empfänger (202) zuvor bekannten angepassten Filtermatrix $M_0$,
am Empfänger (202): Generieren mindestens eines Teils einer Eigenwertmatrix $D$ der Matrix $\Delta M$, die die Änderung der angepassten Filtermatrix kennzeichnet, und mindestens eines Teils der oben generierten Eigenwertmatrix $D$ aus einer korrespondierenden Eigenvektormatrix $U_t$ **durch** Benutzen der Eigenwertzerlegung

$$\Delta M \;=\; U_t \;\; D \;\; U_t^{H},$$

Senden mindestens eines Eigenwertes $\lambda_k$ der Matrix $\Delta M$ und mindestens einen Teil eines dem Eigenwert zugehörigen Eigenvektors $u_{t,k}$ von dem Empfänger (202) an den Sender (300),
am Sender (300): Aktualisieren mindestens eines Teils der angepassten Filtermatrix $M$ **durch** Benutzen mindestens eines Eigenwertes $\lambda_k$ der Matrix $\Delta M$, der die Änderung der angepassten Filtermatrix kennzeichnet und von dem Empfänger (202) an den Sender (300) gesendet wurde, mindestens eines Teils des zu dem Eigenwert zugehörigen Eigenvektors $u_{t,k}$ und mindestens eines Teils einer vorherigen angepassten Filtermatrix $M_0$ des Senders **durch** Benutzen der Gleichung

$$M \;=\; M_0 \;+\; u_{t,k}\sqrt{\lambda_k}\left(u_{t,k}\sqrt{\lambda_k}\right)^{T},$$

am Sender (300): Aktualisieren mindestens eines Teils der Sendefiltermatrix $F_{t,opt}$, die Sendefilterinformationen enthält, **durch** Benutzen der aktualisierten angepassten Filtermatrix $M$ und einer $\Lambda$-Eigenwertzerlegung

$$M \;=\; F_{t,opt}^{-1} \;\; \Lambda \;\; F_{t,opt},$$

wobei $\Lambda$ die Eigenwerte der angepassten Filtermatrix $M$ umfasst.

**7.** Verfahren nach einem der Ansprüche 5 und 6,
**gekennzeichnet durch**
am Empfänger (202) und am Sender (300): Generieren von Singulärwertzerlegungen oder Eigenwertzerlegungen **durch** Benutzen von numerischer Iteration und
Abbrechen der Iteration einer Singulärwertzerlegung oder Eigenwertzerlegung bei einer gewünschten Genauigkeit der Singulärwerte oder Eigenwerte.

**8.** Verfahren nach einem der Ansprüche 5 und 6,
**gekennzeichnet durch**
am Empfänger (202): Generieren von Singulärwertzerlegungen oder Eigenwertzerlegungen durch Benutzen von numerischer Iteration,
am Empfänger (202): Bestimmen der Auswirkung der Ungenauigkeit einer Singulärwertzerlegung oder Eigenwertzerlegung auf die Ungenauigkeit jedes parallelen Kanals,
am Empfänger (202): Generieren von SINR-Schätzungen für jeden parallelen Kanal,
am Empfänger (202): Abbrechen der Iteration der Singulärwertzerlegung oder Eigenwertzerlegung bei der von einer SINR-Schätzung bestimmten Ungenauigkeit.

**9.** Verfahren nach einem der Ansprüche 5 und 6, **gekennzeichnet durch** Generieren einer Singulärwertzerlegung oder Eigenwertzerlegung bei vorbestimmter Genauigkeit **durch** Benutzen von numerischer Iteration,
Bestimmen der Auswirkung der Ungenauigkeit der Singulärwertzerlegung oder Eigenwertzerlegung auf die Genauigkeit der Änderung der Variablen, die Sendefilterinformationen über den Sender (300) enthält,
Quantisieren der bestimmten Änderung der Variablen, die Sendefilterinformationen enthält, **durch** das benutzte Quantisierungsverfahren,
Bestimmen der Ungenauigkeit, die das benutzte Quantisierungsverfahren bei der Genauigkeit der Änderung der Variablen, die Sendefilterinformationen enthält, bewirkt, und

Abbrechen der Iteration der Singulärwertzerlegung oder Eigenwertzerlegung bei der von dem Quantisierungsverfahren bestimmten Ungenauigkeit dergestalt, dass die Änderung der Variablen, die Sendefilterinformationen enthält, in einer richtigen Richtung gerundet wird.

**10.** Verfahren nach einem der Ansprüche 5 und 6, **gekennzeichnet durch** am Empfänger (202) und am Sender (300): Generieren von Singulärwertzerlegungen oder einer Eigenwertzerlegung mit Hilfe von Störungstheorie.

**11.** Verfahren nach Anspruch 1, **gekennzeichnet durch**:

am Empfänger (202): Generieren mindestens eines Teils der Änderung der Variablen, die Sendefilterinformationen über den Sender (300) enthält,

Quantisieren mindestens eines Teils der Änderung der Variablen, die Sendefilterinformationen über den Sender (300) enthält, und

Senden mindestens eines Teils der quantisierten Änderung der Variablen, die Sendefilterinformationen über den Sender (300) enthält, vom Empfänger (202) an den Sender (300).

**12.** Verfahren nach Anspruch 1, **gekennzeichnet durch**:

am Empfänger (202): Generieren mindestens eines Teils der Änderung der Variablen, die Sendefilterinformationen über den Sender (300) enthält,

Quantisieren mindestens eines Teils der Änderung der Variablen, die Sendefilterinformationen über den Sender (300) enthält, **durch** Benutzen eines Modus-1-Standards, und

Senden mindestens eines Teils der quantisierten Änderung der Variablen, die Sendefilterinformationen über den Sender (300) enthält, vom Empfänger (202) an den Sender (300).

**13.** Verfahren nach Anspruch 1, **gekennzeichnet durch**:

am Empfänger (202): Generieren mindestens eines Teils der Änderung der Variablen, die Sendefilterinformationen über den Sender (300) enthält,

Quantisieren mindestens eines Teils der Änderung der Variablen, die Sendefilterinformationen über den Sender (300) enthält, **durch** Benutzen eines Modus-2-Standards, und

Senden mindestens eines Teils der quantisierten Änderung der Variablen, die Sendefilterinformationen über den Sender (300) enthält, vom Empfänger (202) an den Sender (300).

**14.** Verfahren nach Anspruch 1, **gekennzeichnet durch** am Empfänger (202): Bestimmen der Auswirkung der Änderung der Variablen, die Sendefilterinformationen über den Sender (300) enthält, auf die Datentransferkapazität in der Richtung vom Sender (300) an den Empfänger (202) und

Auswählen auf Basis der bestimmten Auswirkung des Teils der Änderung der Variablen, die Sendefilterinformationen über den Sender (300) enthält, der vom Empfänger (202) an den Sender (300) gesendet werden soll.

**15.** Verfahren nach Anspruch 1, **gekennzeichnet durch**:

am Empfänger (202): Bestimmen der Auswirkung der Änderung der Variablen, die Sendefilterinformationen über den Sender (300) enthält, auf die Datentransferkapazität in der Richtung vom Sender (300) an den Empfänger (202) und

Auswählen des Teils der Änderung der Variablen, die Sendefilterinformationen über den Sender (300) enthält, der vom Empfänger (202) an den Sender (300) gesendet werden soll, um die Maximierung der Datentransferkapazität zu ermöglichen.

**16.** Verfahren nach Anspruch 1, **gekennzeichnet durch**:

am Empfänger (202): Bestimmen der Auswirkung der Änderung der Variablen, die Sendefilterinformationen über den Sender (300) enthält, auf die Anzahl verfügbarer paralleler Kanäle und

Auswählen des Teils der Änderung der Variablen, die Sendefilterinformationen über den Sender (300) enthält, der vom Empfänger (202) an den Sender (300) gesendet werden soll, dergestalt, dass eine gewünschte Anzahl verfügbarer paralleler Kanäle erhalten wird.

17. Funksystem mit einem Sender (300), der mindestens ein Antennenfeld (234) aufweist, welches mindestens zwei Antennen (236) aufweist, und mindestens einem Empfänger (202), der mindestens ein Antennenfeld (320) aufweist, welches mindestens zwei Antennen (322) aufweist, wobei das Funksystem einen physikalischen Funkkanal zwischen dem Sender (300) und dem Empfänger (202) umfasst und Folgendes aufweist:

Mittel (208, 212) zum Filtern eines über die Antennen (236) des Antennenfeldes (234) des Senders (300) zu sendenden Signals mit Hilfe von Sendefilterinformationen und
Mittel (380) zum Generieren - am Empfänger (202) - einer Variablen, die Sendefilterinformationen über den Sender (300) enthält, **dadurch gekennzeichnet, dass**:

der Empfänger (202) Mittel (380) zum Generieren mindestens eines Teils einer Änderung der Variablen, die Sendefilterinformationen über den Sender (300) enthält, aufweist,
der Empfänger (202) dazu eingerichtet ist, mindestens einen Teil der Änderung der Variablen, die Sendefilterinformationen über den Sender (300) enthält, vom Empfänger (202) an den Sender (300) zu senden, und
die Mittel (208, 212) zum Filtern dazu eingerichtet sind, die Sendefilterinformationen über den Sender (300) auf Basis der empfangenen Änderung der Variablen, die Sendefilterinformationen enthält, zu aktualisieren.

18. Funksystem nach Anspruch 17, **dadurch gekennzeichnet, dass**:

der Empfänger (202) Mittel (308) aufweist zum Generieren mindestens eines Teils der Änderung der Variablen, die Sendefilterinformationen über den Sender (300) enthält, im Vergleich zu einem zuvor an den Empfänger (202) gesendeten Wert der Variablen, die Sendefilterinformationen enthält.

19. Funksystem nach Anspruch 17, **dadurch gekennzeichnet, dass**:

der Sender (300) Mittel (236) zum Senden des Signals über den physikalischen Funkkanal an den Empfänger aufweist,
der Empfänger (202) Mittel (380) zum Bestimmen mindestens eines Teils einer Kanalschätzung für den physikalischen Kanal auf Basis des empfangenen Signals aufweist,
der Empfänger (202) Mittel (380) aufweist zum Bestimmen mindestens eines Teils der Änderung der Variablen, die Sendefilterinformationen über den Sender (300) enthält, durch Benutzen mindestens eines Teils der bestimmten Kanalschätzung.

20. Funksystem nach Anspruch 17, **dadurch gekennzeichnet, dass**:

der Sender (300) Mittel (236) zum Senden des Signals über den physikalischen Funkkanal an den Empfänger (202) aufweist, wobei das Signal vorbestimmte Informationen umfasst,
die Mittel (380) zum Generieren - am Empfänger (202) - einer Variablen, die Sendefilterinformationen über den Sender (300) enthält, dazu eingerichtet sind, mindestens einen Teil der Kanalschätzung des physikalischen Kanals mit Hilfe der in dem empfangenen Signal enthaltenen vorbestimmten Informationen zu bestimmen,
die Mittel (380) zum Generieren - am Empfänger (202) - einer Variablen, die Sendefilterinformationen über den Sender (300) enthält, dazu eingerichtet sind, mindestens einen Teil der Änderung der Variablen, die Sendefilterinformationen über den Sender (300) enthält, durch Benutzung mindestens eines Teils der bestimmten Kanalschätzung zu bestimmen.

21. Funksystem nach Anspruch 17, **dadurch gekennzeichnet, dass**:

der Sender (300) dazu eingerichtet ist, mindestens eine Trainingssequenz an den Empfänger (202) zu senden, die mindestens eine zuvor bekannte Symbolsequenz umfasst,
die Mittel (380) zum Generieren - am Empfänger (202) - einer Variablen, die Sendefilterinformationen über den Sender (300) enthält, dazu eingerichtet sind, mindestens ein Matrixelement einer Kanalmatrix $H$ mit Hilfe der mindestens einen empfangenen Trainingssequenz zu bestimmen,
die Mittel (380) zum Generieren - am Empfänger (202) - einer Variablen, die Sendefilterinformationen über den Sender (300) enthält, dazu eingerichtet sind, mindestens einen Teil einer Sendefiltermatrix $F_{t,opt}$, die Sendefilterinformationen enthält, mindestens einen Teil einer inversen Matrix $F_{r,opt}^{-1}$ einer Empfangsfiltermatrix, die

einen Empfangsfilter (340) enthält, und mindestens einen Teil einer Singulärwertmatrix $W$ der Kanalmatrix $H$ unter Benutzung mindestens eines Teils der bestimmten Kanalmatrix $H$ und der Singulärwertzerlegung

$$H \;=\; F_{\mathrm{t,opt}} \;\; W \;\; F_{\mathrm{r,opt}}^{-1}$$

zu generieren,

die Mittel (380) zum Generieren - am Empfänger (202) - einer Variablen, die Sendefilterinformationen über den Sender (300) enthält, dazu eingerichtet sind, eine Änderung einer Sendefiltermatrix, die die Sendefilterinformationen darstellt, unter Benutzung mindestens eines Teils der bestimmten Sendefiltermatrix $F_{\mathrm{t,opt}}$ und mindestens eines Teils einer dem Empfänger (202) zuvor bekannten Sendefiltermatrix zu generieren,

der Empfänger (202) dazu eingerichtet ist, mindestens einen Teil der Matrix, die die Änderung der Sendefilterinformationen enthält, an den Sender (300) zu senden,

die Mittel (208, 212) zum Filtern am Sender (300) dazu eingerichtet sind, durch Benutzen mindestens eines Teils der von dem Empfänger (200) an den Sender (300) gesendeten Änderung der Sendefiltermatrix und mindestens eines Teils einer dem Sender (300) zuvor bekannten Sendefiltermatrix mindestens einen Teil der Sendefiltermatrix zu aktualisieren.

**22.** Funksystem nach Anspruch 17, **dadurch gekennzeichnet, dass**

der Sender (300) dazu eingerichtet ist, mindestens eine Trainingssequenz an den Empfänger (202) zu senden, die mindestens eine zuvor bekannte Symbolsequenz umfasst,

die Mittel (380) zum Generieren - am Empfänger (202) - einer Variablen, die Sendefilterinformationen über den Sender (300) enthält, dazu eingerichtet sind, mindestens ein Matrixelement der Kanalmatrix $H$ mit Hilfe der mindestens einen empfangenen Trainingssequenz zu bestimmen,

die Mittel (380) zum Generieren - am Empfänger (202) - einer Variablen, die Sendefilterinformationen über den Sender (300) enthält, dazu eingerichtet sind, aus der Kanalmatrix $H$ durch Benutzen der Gleichung

$$M \;=\; H^{\mathrm{H}} H$$

eine angepasste Filtermatrix $M$ zu generieren,

die Mittel (380) zum Generieren - am Empfänger (202) - einer Variablen, die Sendefilterinformationen über den Sender (300) enthält, dazu eingerichtet sind, durch Benutzen mindestens eines Teils der bestimmten angepassten Filtermatrix $M$ und mindestens eines Teils einer dem Empfänger (202) zuvor bekannten angepassten Filtermatrix $M_0$ eine Matrix $\Delta M$ zu generieren, die die Änderung der angepassten Filtermatrix $M$ kennzeichnet,

die Mittel (380) zum Generieren - am Empfänger (202) - einer Variablen, die Sendefilterinformationen über den Sender (300) enthält, dazu eingerichtet sind, mindestens einen Teil einer Eigenwertmatrix $D$ der Matrix $\Delta M$, die die Änderung der angepassten Filtermatrix kennzeichnet, und mindestens einen Teil der oben generierten Eigenwertmatrix $D$ aus einer korrespondierenden Eigenvektormatrix $U_{\mathrm{t}}$ durch Benutzen der Eigenwertzerlegung

$$\Delta M \;=\; U_{\mathrm{t}} \;\; D \;\; U_{\mathrm{t}}^{\mathrm{H}}$$

zu generieren,

der Empfänger (202) dazu eingerichtet ist, mindestens einen Eigenwert $\lambda_{\mathrm{k}}$ der Matrix $\Delta M$ und mindestens einen Teil eines dem Eigenwert zugehörigen Eigenvektors $u_{t\,k}$ von an den Sender (300) zu senden,

die Mittel (208, 212) zum Filtern am Sender (300) dazu eingerichtet sind, durch Benutzen mindestens eines Eigenwertes $\lambda_{\mathrm{k}}$ der Matrix $\Delta M$, der die Änderung der angepassten Filtermatrix kennzeichnet und von dem Empfänger (202) an den Sender (300) gesendet wurde, mindestens eines Teils des zu dem Eigenwert zugehörigen Eigenvektors $u_{t,k}$ und mindestens eines Teils einer vorherigen angepassten Filtermatrix $M_0$ des Senders durch Benutzen der Gleichung

$$M \; = \; M_0 \; + \; u_{\mathrm{t},k}\sqrt{\lambda_k}\left(u_{\mathrm{t},k}\sqrt{\lambda_k}\right)^{\mathrm{T}}$$

mindestens einen Teil der angepassten Filtermatrix *M* zu aktualisieren,
die Mittel (208, 212) zum Filtern am Sender (300) dazu eingerichtet sind, durch Benutzen der aktualisierten angepassten Filtermatrix *M* und der $\Lambda$-Eigenwertzerlegung

$$M \; = \; F_{\mathrm{t,opt}}^{\;\;-1} \; \Lambda \; F_{\mathrm{t,opt}}$$

wobei $\Lambda$ die Eigenwerte der angepassten Filtermatrix M umfasst, mindestens einen Teil der Sendefiltermatrix $F_{\mathrm{t,opt}}$, die Sendefilterinformationen enthält, zu aktualisieren,

**23.** Funksystem nach einem der Ansprüche 21 und 22,
**dadurch gekennzeichnet, dass**
die Mittel (380) zum Generieren - am Empfänger (202) - einer Variablen, die Sendefilterinformationen über den Sender (300) enthält, und die Mittel (208, 212) zum Filtern am Sender (300) dazu eingerichtet sind, durch Benutzen von numerischer Iteration Singulärwertzerlegungen oder Eigenwertzerlegungen zu generieren, und
die Mittel (380) zum Generieren - am Empfänger (202) - einer Variablen, die Sendefilterinformationen über den Sender (300) enthält, und die Mittel (208, 212) zum Filtern am Sender (300) dazu eingerichtet sind, die Iteration einer Singulärwertzerlegung oder Eigenwertzerlegung bei einer gewünschten Genauigkeit der Singulärwerte oder Eigenwerte abzubrechen.

**24.** Funksystem nach einem der Ansprüche 21 und 22,
**dadurch gekennzeichnet, dass**
die Mittel (380) zum Generieren - am Empfänger (202) - einer Variablen, die Sendefilterinformationen über den Sender (300) enthält, dazu eingerichtet sind, durch Benutzen von numerischer Iteration Singulärwertzerlegungen oder Eigenwertzerlegungen zu generieren,
die Mittel (380) zum Generieren - am Empfänger (202) - einer Variablen, die Sendefilterinformationen über den Sender (300) enthält, dazu eingerichtet sind, die Auswirkung der Ungenauigkeit einer Singulärwertzerlegung oder Eigenwertzerlegung auf die Ungenauigkeit jedes parallelen Kanals zu bestimmen,
die Mittel (380) zum Generieren - am Empfänger (202) - einer Variablen, die Sendefilterinformationen über den Sender (300) enthält, dazu eingerichtet sind, SINR-Schätzungen für jeden parallelen Kanal zu generieren,
die Mittel (380) zum Generieren - am Empfänger (202) - einer Variablen, die Sendefilterinformationen über den Sender (300) enthält, dazu eingerichtet sind, die Iteration der Singulärwertzerlegung oder Eigenwertzerlegung bei der von einer SINR-Schätzung bestimmten Ungenauigkeit abzubrechen.

**25.** Funksystem nach einem der Ansprüche 21 und 22,
**dadurch gekennzeichnet, dass**
die Mittel (380) zum Generieren - am Empfänger (202) - einer Variablen, die Sendefilterinformationen über den Sender (300) enthält, dazu eingerichtet sind, durch Benutzen von numerischer Iteration eine Singulärwertzerlegung oder eine Eigenwertzerlegung mit vorbestimmter Genauigkeit zu generieren,
die Mittel (380) zum Generieren - am Empfänger (202) - einer Variablen, die Sendefilterinformationen über den Sender (300) enthält, dazu eingerichtet sind, die Auswirkung der Ungenauigkeit der Singulärwertzerlegung oder Eigenwertzerlegung auf die Genauigkeit der Änderung der Variablen, die Sendefilterinformationen über den Sender (300) enthält, zu bestimmen,
die Mittel (380) zum Generieren - am Empfänger (202) - einer Variablen, die Sendefilterinformationen über den Sender (300) enthält, dazu eingerichtet sind, die bestimmte Änderung der Variablen, die Sendefilterinformationen enthält, durch das zu benutzende Quantisierungsverfahren zu quantisieren,
die Mittel (380) zum Generieren - am Empfänger (202) - einer Variablen, die Sendefilterinformationen über den Sender (300) enthält, dazu eingerichtet sind, die von dem benutzten Quantisierungsverfahren an der Genauigkeit der Änderung der Variablen, die Sendefilterinformationen enthält, verursachte Ungenauigkeit zu bestimmen, und
die Mittel (380) zum Generieren - am Empfänger (202) - einer Variablen, die Sendefilterinformationen über den Sender (300) enthält, dazu eingerichtet sind, die Iteration der Singulärwertzerlegung oder Eigenwertzerlegung bei der von dem Quantisierungsverfahren bestimmten Ungenauigkeit dergestalt abzubrechen, dass die Änderung der Variablen, die Sendefilterinformationen enthält, in einer richtigen Richtung gerundet wird.

**26.** Funksystem nach einem der Ansprüche 21 und 22, **dadurch gekennzeichnet, dass** die Mittel (380) zum Generieren - am Empfänger (202) - einer Variablen, die Sendefilterinformationen über den Sender (300) enthält, und die Mittel (208, 212) am Sender (300) dazu eingerichtet sind, mit Hilfe von Störungstheorie eine Singulärwertzerlegung oder Eigenwertzerlegung zu generieren.

**27.** Funksystem nach Anspruch 17, **dadurch gekennzeichnet, dass** die Mittel (380) zum Generieren - am Empfänger (202) - einer Variablen, die Sendefilterinformationen über den Sender (300) enthält, dazu eingerichtet sind, mindestens einen Teil der Änderung der Variablen, die Sendefilterinformationen über den Sender (300) enthält, zu generieren, die Mittel (380) zum Generieren - am Empfänger (202) - einer Variablen, die Sendefilterinformationen über den Sender (300) enthält, dazu eingerichtet sind, mindestens einen Teil der Änderung der Variablen, die Sendefilterinformationen über den Sender (300) enthält, zu quantisieren, und der Empfänger (202) dazu eingerichtet ist, mindestens einen Teil der quantisierten Änderung der Variablen, die Sendefilterinformationen über den Sender (300) enthält, an den Sender (300) zu senden.

**28.** Funksystem nach Anspruch 17, **dadurch gekennzeichnet, dass** die Mittel (380) zum Generieren - am Empfänger (202) - einer Variablen, die Sendefilterinformationen über den Sender (300) enthält, dazu eingerichtet sind, mindestens einen Teil der Änderung der Variablen, die Sendefilterinformationen über den Sender (300) enthält, zu generieren, die Mittel (380) zum Generieren - am Empfänger (202) - einer Variablen, die Sendefilterinformationen über den Sender (300) enthält, dazu eingerichtet sind, mindestens einen Teil der Änderung der Variablen, die Sendefilterinformationen über den Sender (300) enthält, durch Benutzung eines Modus-1-Standards zu quantisieren, und der Empfänger (202) dazu eingerichtet ist, mindestens einen Teil der quantisierten Änderung der Variablen, die Sendefilterinformationen über den Sender (300) enthält, an den Sender (300) zu senden.

**29.** Funksystem nach Anspruch 17, **dadurch gekennzeichnet, dass** die Mittel (380) zum Generieren - am Empfänger (202) - einer Variablen, die Sendefilterinformationen über den Sender (300) enthält, dazu eingerichtet sind, mindestens einen Teil der Änderung der Variablen, die Sendefilterinformationen über den Sender (300) enthält, zu generieren, die Mittel (380) zum Generieren - am Empfänger (202) - einer Variablen, die Sendefilterinformationen über den Sender (300) enthält, dazu eingerichtet sind, mindestens einen Teil der Änderung der Variablen, die Sendefilterinformationen über den Sender (300) enthält, durch Benutzung eines Modus-2-Standards zu quantisieren, und der Empfänger (202) dazu eingerichtet ist, mindestens einen Teil der quantisierten Änderung der Variablen, die Sendefilterinformationen über den Sender (300) enthält, an den Sender (300) zu senden.

**30.** Funksystem nach Anspruch 17, **dadurch gekennzeichnet, dass** die Mittel (380) zum Generieren - am Empfänger (202) - einer Variablen, die Sendefilterinformationen über den Sender (300) enthält, dazu eingerichtet sind, die Auswirkung der Änderung der Variablen, die Sendefilterinformationen über den Sender (300) enthält, auf die Datentransferkapazität in der Richtung vom Sender (300) an den Empfänger (202) zu bestimmen, und die Mittel (380) zum Generieren - am Empfänger (202) - einer Variablen, die Sendefilterinformationen über den Sender (300) enthält, dazu eingerichtet sind, auf Basis der bestimmten Auswirkung den Teil der Änderung der Variablen, die Sendefilterinformationen über den Sender (300) enthält, auszuwählen, der von dem Empfänger (202) an den Sender (300) gesendet werden soll.

**31.** Funksystem nach Anspruch 17, **dadurch gekennzeichnet, dass** die Mittel (380) zum Generieren - am Empfänger (202) - einer Variablen, die Sendefilterinformationen über den Sender (300) enthält, dazu eingerichtet sind, die Auswirkung der Änderung der Variablen, die Sendefilterinformationen über den Sender (300) enthält, auf die Datentransferkapazität in der Richtung vom Sender (300) an den Empfänger (202) zu bestimmen, und

die Mittel (380) zum Generieren - am Empfänger (202) - einer Variablen, die Sendefilterinformationen über den Sender (300) enthält, dazu eingerichtet sind, den Teil der Änderung der Variablen, die Sendefilterinformationen über den Sender (300) enthält, auszuwählen, der von dem Empfänger (202) an den Sender (300) gesendet werden soll, um die Maximierung der Datentransferkapazität zu ermöglichen.

**32.** Funksystem nach Anspruch 17, **dadurch gekennzeichnet, dass**

die Mittel (380) zum Generieren - am Empfänger (202) - einer Variablen, die Sendefilterinformationen über den Sender (300) enthält, dazu eingerichtet sind, die Auswirkung der Änderung der Variablen, die Sendefilterinformationen über den Sender (300) enthält, auf die Anzahl der verfügbaren parallelen Kanäle zu bestimmen, und

die Mittel (380) zum Generieren - am Empfänger (202) - einer Variablen, die Sendefilterinformationen über den Sender (300) enthält, dazu eingerichtet sind, den Teil der Änderung der Variablen, die Sendefilterinformationen über den Sender (300) enthält, der von dem Empfänger (202) an den Sender (300) gesendet werden soll, dergestalt auszuwählen, dass eine gewünschte Anzahl verfügbarer paralleler Kanäle erhalten wird.


**Revendications**

**1.** Procédé de transfert de données dans un système de radiocommunication incluant un émetteur (300) comportant au moins un réseau d'antennes (234) incluant au moins deux antennes (236), et au moins un récepteur (202) comportant au moins un réseau d'antennes (320) incluant au moins deux antennes (322), le système de radiocommunication comportant un canal radio physique entre l'émetteur (300) et le récepteur (202) ; le procédé incluant les étapes consistant à

filtrer, au moyen d'informations de filtre de transmission, un signal devant être transmis par l'intermédiaire des antennes (236) du réseau d'antennes (234) de l'émetteur (300) ; et

générer, au niveau du récepteur (202), une variable qui contient des informations de filtre de transmission sur l'émetteur (300),

**caractérisé par** les étapes consistant à

générer, au niveau du récepteur (202), au moins une partie d'une modification au niveau de la variable contenant des informations de filtre de transmission sur l'émetteur (300) ;

transmettre au moins une partie de la modification au niveau de la variable contenant des informations de filtre de transmission sur l'émetteur (300) du récepteur (202) à l'émetteur (300) ; et

mettre à jour, au niveau de l'émetteur (300), les informations de filtre de transmission sur l'émetteur (300) sur la base de la modification reçue au niveau de la variable contenant des informations de filtre de transmission.

**2.** Procédé selon la revendication 1, **caractérisé par** les étapes consistant à générer, au niveau du récepteur (202), au moins une partie de la modification au niveau de la variable contenant des informations de filtre de transmission sur l'émetteur (300) en comparaison avec une valeur de la variable contenant des informations de filtre de transmission transmises préalablement au récepteur (202).

**3.** Procédé selon la revendication 1, **caractérisé par** les étapes consistant à transmettre le signal au récepteur (202) au moyen de l'émetteur (300) par l'intermédiaire du canal radio physique ;

déterminer, au niveau du récepteur (202), au moins une partie d'une estimation de canal du canal physique sur la base du signal reçu ;

déterminer, au niveau du récepteur (202), au moins une partie de la modification au niveau de la variable contenant des informations de filtre de transmission sur l'émetteur (300) en utilisant au moins une partie de l'estimation de canal déterminée.

**4.** Procédé selon la revendication 1, **caractérisé par** les étapes consistant à transmettre le signal au récepteur (202) au moyen de l'émetteur (300) par l'intermédiaire du canal radio physique, le signal comportant des informations prédéterminées,

déterminer, au niveau du récepteur (202), au moins une partie d'une estimation de canal du canal physique au moyen des informations prédéterminées contenues dans le signal reçu;

déterminer, au niveau du récepteur (202), au moins une partie de la modification au niveau de la variable contenant des informations de filtre de transmission sur l'émetteur (300) en utilisant au moins une partie de l'estimation de canal déterminée.

**5.** Procédé selon la revendication 1, **caractérisé par** les étapes consistant à transmettre au moins une séquence d'apprentissage comportant au moins une séquence de symbole préalablement connue au récepteur (202) au moyen de l'émetteur (300) ;

déterminer, au niveau du récepteur (202), au moins un élément de matrice d'une matrice de canal H au moyen de ladite au moins une séquence d'apprentissage reçue ;

générer, au niveau du récepteur (202), au moins une partie d'une matrice de filtre de transmission $F_{t,opt}$ qui contient des informations de filtre de transmission, au moins une partie d'une matrice inverse $F_{r,opt}^{-1}$ d'une matrice de filtre de réception qui contient un filtre de réception (340), et au moins une partie d'une matrice de valeurs singulières W de la matrice de canal H en utilisant au moins une partie de la matrice de canal déterminée H et de la décomposition en valeurs singulières

$$H = F_{t,opt} W F_{r,opt}^{-1} ;$$

générer, au niveau du récepteur (202), la modification au niveau de la matrice de filtre de transmission représentant les informations de filtre de transmission en utilisant au moins une partie de la matrice de filtre de transmission déterminée $F_{t,opt}$ et au moins une partie d'une matrice de filtre de transmission préalablement connue du récepteur (202) ;

transmettre au moins une partie de la matrice qui contient la modification au niveau des informations de filtre de transmission du récepteur (202) à l'émetteur (300);

mettre à jour, au niveau de l'émetteur (300), au moins une partie de la matrice de filtre de transmission en utilisant au moins une partie de la modification au niveau de la matrice de filtre de transmission transmise à l'émetteur (300) au moyen du récepteur (200) et au moins une partie d'une matrice de filtre de transmission préalablement connue de l'émetteur (300).

**6.** Procédé selon la revendication 1, **caractérisé par** les étapes consistant à transmettre au moins une séquence d'apprentissage comportant au moins une séquence de symbole préalablement connue au récepteur (200) au moyen de l'émetteur (300) ;

déterminer, au niveau du récepteur (202), au moins un élément de matrice de la matrice de canal H au moyen de ladite au moins une séquence d'apprentissage reçue;

générer une matrice de filtre adapté M à partir de la matrice de canal H en utilisant l'équation

$$M = H^H H ;$$

générer, au niveau du récepteur (202), une matrice $\Delta M$ caractérisant une modification au niveau de la matrice de filtre adapté M en utilisant au moins une partie de la matrice de filtre adapté déterminée M et au moins une partie d'une matrice de filtre adapté $M_0$ préalablement connue du récepteur (202) ;

générer, au niveau du récepteur (300), au moins une partie d'une matrice de valeur propre D de la matrice $\Delta M$ caractérisant la modification au niveau de la matrice de filtre adapté et au moins une partie de la matrice de valeur propre générée ci-dessus D à partir d'une matrice de vecteur propre correspondante $U_t$ en utilisant la décomposition en valeurs propres

$$\Delta M = U_I D U_I^H ;$$

transmettre au moins une valeur propre $\lambda_k$ de la matrice $\Delta M$ et au moins une partie d'un vecteur propre $U_{t,k}$ associé à ladite valeur propre du récepteur (202) à l'émetteur (300) ;

mettre à jour, au niveau de l'émetteur (300), au moins une partie de la matrice de filtre adapté *M* en utilisant au moins une valeur propre $\lambda_k$ de la matrice $\Delta M$ caractérisant la modification au niveau de la matrice de filtre adapté et transmettre à l'émetteur (300) au moyen du récepteur (202), au moins une partie du vecteur propre $U_{t,k}'$ associé à ladite valeur propre et au moins une partie d'une matrice de filtre adapté précédente $M_0$ de l'émetteur en utilisant l'équation

$$M = M_0 + u_{t,k} \sqrt{\lambda_k} \left( u_{t,k} \sqrt{\lambda_k} \right)^T ;$$

mettre à jour, au niveau de l'émetteur (300), au moins une partie de la matrice de filtre de transmission $F_{t,opt}$ contenant des informations de filtre de transmission en utilisant la matrice de filtre adapté mise à jour M et la décomposition en valeurs propres $\Lambda$

$$M = F_{r,opt}^{-1} \ \Lambda \ F_{t,opt},$$

où $\Lambda$ comporte les valeurs propres de la matrice de filtre adapté M.

7. Procédé selon l'une quelconque des revendications 5 et 6, **caractérisé par** les étapes consistant à
générer, au niveau du récepteur (202) et de l'émetteur (300), des décompositions en valeurs singulières ou des décompositions en valeurs propres en utilisant une itération numérique ; et
interrompre l'itération d'une décomposition en valeurs singulières ou d'une décomposition en valeurs propres à un niveau de précision désiré de valeurs singulières ou de valeurs propres.

8. Procédé selon l'une quelconque des revendications 5 et 6, **caractérisé par** les étapes consistant à
générer, au niveau du récepteur (202), des décompositions en valeurs singulières ou des décompositions en valeurs propres en utilisant une itération numérique ;
déterminer, au niveau du récepteur (202), l'effet de l'imprécision d'une décomposition en valeurs singulières ou d'une décomposition en valeurs propres sur l'imprécision de chaque canal parallèle ;
générer, au niveau du récepteur (202), des estimations SINR pour chaque canal parallèle;
interrompre, au niveau du récepteur (202), l'itération de la décomposition en valeurs singulières ou de la décomposition en valeurs propres au niveau d'imprécision déterminé par une estimation SINR.

9. Procédé selon l'une quelconque des revendications 5 et 6, **caractérisé par** les étapes consistant à
générer une décomposition en valeurs singulières ou une décomposition en valeurs propres à un niveau de précision prédéterminé en utilisant une itération numérique ;
déterminer l'effet de l'imprécision de la décomposition en valeurs singulières ou de la décomposition en valeurs propres sur la précision de la modification au niveau de la variable contenant des informations de filtre de transmission sur l'émetteur (300) ;
quantifier la modification déterminée au niveau de la variable contenant des informations de filtre de transmission par le procédé de quantification utilisé ;
déterminer le niveau d'imprécision occasionné par le procédé de quantification utilisé sur la précision de la modification au niveau de la variable contenant des informations de filtre de transmission ; et
interrompre l'itération de la décomposition en valeurs singulières ou de la décomposition en valeurs propres au niveau d'imprécision déterminé par le procédé de quantification de sorte que la modification au niveau de la variable contenant des informations de filtre de transmission est arrondie dans une direction correcte.

10. Procédé selon l'une quelconque des revendications 5 et 6,
**caractérisé par** l'étape consistant à
générer, au niveau du récepteur (202) et de l'émetteur (300), des décompositions en valeurs singulières ou une décomposition en valeurs propres au moyen d'une théorie des perturbations.

11. Procédé selon la revendication 1, **caractérisé par** les étapes consistant à
générer, au niveau du récepteur (202), au moins une partie de la modification au niveau de la variable contenant des informations de filtre de transmission sur l'émetteur (300) ;
quantifier au moins une partie de la modification au niveau de la variable contenant des informations de filtre de transmission sur l'émetteur (300); et
transmettre au moins une partie de la modification quantifiée au niveau de la variable contenant des informations de filtre de transmission sur l'émetteur (300) du récepteur (202) à l'émetteur (300).

12. Procédé selon la revendication 1, **caractérisé par** les étapes consistant à
générer, au niveau du récepteur (202), au moins une partie de la modification au niveau de la variable contenant des informations de filtre de transmission sur l'émetteur (300) ;

quantifier au moins une partie de la modification au niveau de la variable contenant des informations de filtre de transmission sur l'émetteur (300) en utilisant une norme de Mode 1 ; et

transmettre au moins une partie de la modification quantifiée au niveau de la variable contenant des informations de filtre de transmission sur l'émetteur (300) du récepteur (202) à l'émetteur (300).

**13.** Procédé selon la revendication 1, **caractérisé par** les étapes consistant à

générer, au niveau du récepteur (202), au moins une partie de la modification au niveau de la variable contenant des informations de filtre de transmission sur l'émetteur (300);

quantifier au moins une partie de la modification au niveau de la variable contenant des informations de filtre de transmission sur l'émetteur (300) en utilisant une norme de Mode 2 ; et

transmettre au moins une partie de la modification quantifiée au niveau de la variable contenant des informations de filtre de transmission sur l'émetteur (300) du récepteur (202) à l'émetteur (300).

**14.** Procédé selon la revendication 1, **caractérisé par** les étapes consistant à

déterminer, au niveau du récepteur (202), l'effet de la modification au niveau de la variable contenant des informations de filtre de transmission sur l'émetteur (300) sur la capacité de transfert de données orientée de l'émetteur (300) au récepteur (202), et

sélectionner, sur la base de l'effet déterminé, la partie de la modification au niveau de la variable contenant des informations de filtre de transmission sur l'émetteur (300) à transmettre du récepteur (202) à l'émetteur (300).

**15.** Procédé selon la revendication 1, **caractérisé par** les étapes consistant à

déterminer, au niveau du récepteur (202), l'effet de la modification au niveau de la variable contenant des informations de filtre de transmission sur l'émetteur (300) sur la capacité de transfert de données orientée de l'émetteur (300) au récepteur (202), et

sélectionner la partie de la modification au niveau de la variable contenant des informations de filtre de transmission sur l'émetteur (300) à transmettre du récepteur (202) à l'émetteur (300) en vue de permettre à ladite capacité de transfert de données d'être maximisée.

**16.** Procédé selon la revendication 1, **caractérisé par** les étapes consistant à

déterminer, au niveau du récepteur (202), l'effet de la modification au niveau de la variable contenant des informations de filtre de transmission connexes à l'émetteur (300) sur le nombre de canaux parallèles disponible; et

sélectionner la partie de la modification au niveau de la variable contenant des informations de filtre de transmission sur l'émetteur (300) à transmettre du récepteur (202) à l'émetteur (300) de sorte qu'un nombre désiré de canaux parallèles disponible est atteint.

**17.** Système de radiocommunication comportant un émetteur (300) incluant au moins un réseau d'antennes (234) comportant au moins deux antennes (236), et au moins un récepteur (202) incluant au moins un réseau d'antennes (320) comportant au moins deux antennes (322), le système de radiocommunication incluant un canal radio physique entre l'émetteur (300) et le récepteur (202) ; le système de radiocommunication comportant

des moyens (208, 212) en vue de filtrer, au moyen d'informations de filtre de transmission, un signal devant être transmis par l'intermédiaire des antennes (236) du réseau d'antennes (234) de l'émetteur (300); et

des moyens (380) en vue de générer, au niveau du récepteur (202), une variable qui contient des informations de filtre de transmission sur l'émetteur (300), **caractérisé en ce que**

le récepteur (202) comporte des moyens (380) en vue de générer au moins une partie d'une modification au niveau de la variable contenant des informations de filtre de transmission sur l'émetteur (300) ;

le récepteur (202) est agencé en vue de transmettre au moins une partie de la modification au niveau de la variable contenant des informations de filtre de transmission sur l'émetteur (300) du récepteur (202) à l'émetteur (300); et

les moyens (208, 212) en vue de filtrer sont agencés afin de mettre à jour les informations de filtre de transmission sur l'émetteur (300) sur la base de la modification reçue au niveau de la variable contenant des informations de filtre de transmission.

**18.** Système de radiocommunication selon la revendication 17,
**caractérisé en ce que**

le récepteur (202) comporte des moyens (380) en vue de générer au moins une partie de la modification au niveau de la variable contenant des informations de filtre de transmission sur l'émetteur (300) en comparaison avec une valeur de la variable contenant des informations de filtre de transmission transmises préalablement au récepteur (202).

**19.** Système de radiocommunication selon la revendication 17,
**caractérisé en ce que**
l'émetteur (300) comporte des moyens (236) en vue de transmettre le signal au récepteur par l'intermédiaire du canal radio physique ;
le récepteur (202) comporte des moyens (380) en vue de déterminer au moins une partie d'une estimation de canal du canal physique sur la base du signal reçu;
le récepteur (202) comporte des moyens (380) en vue de déterminer au moins une partie de la modification au niveau de la variable contenant des informations de filtre de transmission sur l'émetteur (300) en utilisant au moins une partie de l'estimation de canal déterminée.

**20.** Système de radiocommunication selon la revendication 17,
**caractérisé en ce que**
l'émetteur (300) comporte des moyens (236) en vue de transmettre le signal au récepteur (202) par l'intermédiaire du canal radio physique, le signal comportant des informations prédéterminées ;
les moyens (380) en vue de générer, au niveau du récepteur (202), une variable contenant des informations de filtre de transmission sur l'émetteur (300) sont agencés afin de déterminer au moins une partie de l'estimation de canal du canal physique au moyen des informations prédéterminées contenues dans le signal reçu ;
les moyens (380) en vue de générer, au niveau du récepteur (202), une variable contenant des informations de filtre de transmission sur l'émetteur (300) sont agencés afin de déterminer au moins une partie de la modification au niveau de la variable contenant des informations de filtre de transmission sur l'émetteur (300) en utilisant au moins une partie de l'estimation de canal déterminée.

**21.** Système de radiocommunication selon la revendication 17,
**caractérisé en ce que**
l'émetteur (300) est agencé en vue de transmettre au moins une séquence d'apprentissage comportant au moins une séquence de symbole préalablement connue au récepteur (202) ;
les moyens (380) en vue de générer, au niveau du récepteur (202), une variable contenant des informations de filtre de transmission sur l'émetteur (300) sont agencés afin de déterminer au moins un élément de matrice d'une matrice de canal H au moyen de ladite au moins une séquence d'apprentissage reçue ;
les moyens (380) en vue de générer, au niveau du récepteur (202), une variable contenant des informations de filtre de transmission sur l'émetteur (300) sont agencés en vue de générer au moins une partie d'une matrice de filtre de transmission $F_{t,opt}$ qui contient des informations de filtre de transmission, au moins une partie d'une matrice inverse $F_{r,opt}^{-1}$ d'une matrice de filtre de réception qui contient un filtre de réception (340), et au moins une partie d'une matrice de valeurs singulières W de la matrice de canal H en utilisant au moins une partie de la matrice de canal déterminée H et de la décomposition en valeurs singulières

$$H = F_{t,opt} W F_{r,opt}^{-1} ;$$

les moyens (380) en vue de générer, au niveau du récepteur (202), une variable contenant des informations de filtre de transmission sur l'émetteur (300) sont agencés en vue de générer une modification au niveau de la matrice de filtre de transmission représentant les informations de filtre de transmission en utilisant au moins une partie de la matrice de filtre de transmission déterminée $F_{r,opt}$ et au moins une partie d'une matrice de filtre de transmission préalablement connue du récepteur (202) ;
le récepteur (202) est agencé en vue de transmettre au moins une partie de la matrice contenant la modification au niveau des informations de filtre de transmission à l'émetteur (300) ;
les moyens (208, 212) en vue de filtrer, au niveau de l'émetteur (300), sont agencés afin de mettre à jour au moins une partie de la matrice de filtre de transmission en utilisant au moins une partie de la modification au niveau de la matrice de filtre de transmission transmise à l'émetteur (300) au moyen du récepteur (200) et au moins une partie d'une matrice de filtre de transmission préalablement connue de l'émetteur (300).

**22.** Système de radiocommunication selon la revendication 17,
**caractérisé en ce que**
l'émetteur (300) est agencé en vue de transmettre au moins une séquence d'apprentissage comportant au moins une séquence de symbole préalablement connue au récepteur (202) ;
les moyens (380) en vue de générer, au niveau du récepteur (202), une variable contenant des informations de filtre de transmission sur l'émetteur (300) sont agencés afin de déterminer au moins un élément de matrice de la matrice de canal H au moyen de ladite au moins une séquence d'apprentissage reçue ;

les moyens (380) en vue de générer, au niveau du récepteur (202), une variable contenant des informations de filtre de transmission sur l'émetteur (300) sont agencés en vue de générer une matrice de filtre adapté M à partir de la matrice de canal H en utilisant l'équation

$$M = H^H H \; ;$$

les moyens (380) en vue de générer, au niveau du récepteur (202), une variable contenant des informations de filtre de transmission sur l'émetteur (300) sont agencés en vue de générer une matrice $\Delta M$ caractérisant la modification au niveau de la matrice de filtre adapté M en utilisant au moins une partie de la matrice de filtre adapté déterminée M et au moins une partie d'une matrice de filtre adapté $M_0$ préalablement connue du récepteur (202) ;

les moyens (380) en vue de générer, au niveau du récepteur (202), une variable contenant des informations de filtre de transmission sur l'émetteur (300) sont agencés en vue de générer au moins une partie d'une matrice de valeur propre D de la matrice $\Delta M$ caractérisant la modification au niveau de la matrice de filtre adapté et au moins une partie de la matrice de valeur propre générée ci-dessus D à partir d'une matrice de vecteur propre correspondante $U_t$ en utilisant la décomposition en valeurs propres

$$\Delta M = U_I D U_I^H \; ;$$

le récepteur (202) est agencé en vue de transmettre au moins une valeur propre $\lambda_k$ de la matrice $\Delta M$ et au moins une partie d'un vecteur propre $u_{t,k}$ associé à ladite valeur propre to l'émetteur (300) ;

les moyens (208, 212) en vue de filtrer, au niveau de l'émetteur (300), sont agencés afin de mettre à jour au moins une partie de la matrice de filtre adapté M en utilisant au moins une valeur propre $\lambda_k$ de la matrice $\Delta M$ caractérisant la modification au niveau de la matrice de filtre adapté et transmise à l'émetteur (300) au moyen du récepteur (202), au moins une partie du vecteur propre $u_{t,k}$ associé à ladite valeur propre, et au moins une partie d'une matrice de filtre adapté précédente $M_0$ de l'émetteur en utilisant l'équation

$$M = M_0 + u_{t,k} \sqrt{\lambda_k} \left( u_{t,k} \sqrt{\lambda_k} \right)^T \; ;$$

les moyens (208, 212) en vue de filtrer, au niveau de l'émetteur (300), sont agencés afin de mettre à jour au moins une partie de la matrice de filtre de transmission $F_{t,opt}$ contenant des informations de filtre de transmission en utilisant la matrice de filtre adapté mise à jour M et la décomposition en valeurs propres $\Lambda$

$$M = F_{r,opt}^{-1} \; \Lambda F_{t,opt} \; ,$$

où $\Lambda$ comporte la valeur propres.de la matrice de filtre adapté M.

**23.** Système de radiocommunication selon l'une quelconque des revendications 21 et 22, **caractérisé en ce que**
les moyens (380) en vue de générer, au niveau du récepteur (202), une variable contenant des informations de filtre de transmission sur l'émetteur (300) et les moyens (208, 212) en vue de filtrer, au niveau de l'émetteur (300), sont agencés en vue de générer des décompositions en valeurs singulières ou des décompositions en valeurs propres en utilisant une itération numérique ; et
les moyens (380) en vue de générer, au niveau du récepteur (202), une variable contenant des informations de filtre de transmission sur l'émetteur (300) et les moyens (208, 212) en vue de filtrer, au niveau de l'émetteur (300), sont agencés afin d'interrompre l'itération d'une décomposition en valeurs singulières ou d'une décomposition en valeurs propres à un niveau de précision désiré de valeurs singulières ou de valeurs propres.

**24.** Système de radiocommunication selon l'une quelconque des revendications 21 et 22, **caractérisé en ce que**
les moyens (380) en vue de générer, au niveau du récepteur (202), une variable contenant des informations de filtre de transmission sur l'émetteur (300) sont agencés en vue de générer des décompositions en valeurs singulières ou des décompositions en valeurs propres en utilisant une itération numérique;

les moyens (380) en vue de générer, au niveau du récepteur (202), une variable contenant des informations de filtre de transmission sur l'émetteur (300) sont agencés afin de déterminer l'effet de l'imprécision d'une décomposition en valeurs singulières ou d'une décomposition en valeurs propres sur l'imprécision de chaque canal parallèle ;

les moyens (380) en vue de générer, au niveau du récepteur (202), une variable contenant des informations de filtre de transmission sur l'émetteur (300) sont agencés en vue de générer des estimations SINR pour chaque canal parallèle ;

les moyens (380) en vue de générer, au niveau du récepteur (202), une variable contenant des informations de filtre de transmission sur l'émetteur (300) sont agencés afin d'interrompre l'itération de la décomposition en valeurs singulières ou de la décomposition en valeurs propres au niveau d'imprécision déterminé par une estimation SINR.

**25.** Système de radiocommunication selon l'une quelconque des revendications 21 et 22, **caractérisé en ce que**

les moyens (380) en vue de générer, au niveau du récepteur (202), une variable contenant des informations de filtre de transmission sur l'émetteur (300) sont agencés en vue de générer une décomposition en valeurs singulières ou une décomposition en valeurs propres à un niveau de précision prédéterminé en utilisant une itération numérique ;

les moyens (380) en vue de générer, au niveau du récepteur (202), une variable contenant des informations de filtre de transmission sur l'émetteur (300) sont agencés afin de déterminer l'effet de l'imprécision de la décomposition en valeurs singulières ou de la décomposition en valeurs propres sur la précision de la modification au niveau de la variable contenant des informations de filtre de transmission sur l'émetteur (300) ;

les moyens (380) en vue de générer, au niveau du récepteur (202), une variable contenant des informations de filtre de transmission sur l'émetteur (300) sont agencés pour quantifier la modification déterminée au niveau de la variable contenant des informations de filtre de transmission par le procédé de quantification à utiliser ;

les moyens (380) en vue de générer, au niveau du récepteur (202), une variable contenant des informations de filtre de transmission sur l'émetteur (300) sont agencés afin de déterminer le niveau d'imprécision occasionné par le procédé de quantification utilisé sur la précision de la modification au niveau de la variable contenant des informations de filtre de transmission ; et

les moyens (380) en vue de générer, au niveau du récepteur (202), une variable contenant des informations de filtre de transmission sur l'émetteur (300) sont agencés afin d'interrompre l'itération de la décomposition en valeurs singulières ou de la décomposition en valeurs propres au niveau d'imprécision déterminé par le procédé de quantification de sorte que la modification au niveau de la variable contenant des informations de filtre de transmission est arrondie dans une direction correcte.

**26.** Système de radiocommunication selon l'une quelconque des revendications 21 et 22, **caractérisé en ce que**

les moyens (380) en vue de générer, au niveau du récepteur (202), une variable contenant des informations de filtre de transmission sur l'émetteur (300) et les moyens (208, 212) au niveau de l'émetteur (300) sont agencés en vue de générer une décomposition en valeurs singulières ou une décomposition en valeurs propres au moyen d'une théorie des perturbations.

**27.** Système de radiocommunication selon la revendication 17,
**caractérisé en ce que**

les moyens (380) en vue de générer, au niveau du récepteur (202), une variable contenant des informations de filtre de transmission sur l'émetteur (300) sont agencés en vue de générer au moins une partie de la modification au niveau de la variable contenant des informations de filtre de transmission sur l'émetteur (300) ;

les moyens (380) en vue de générer, au niveau du récepteur (202), une variable contenant des informations de filtre de transmission sur l'émetteur (300) sont agencés pour quantifier au moins une partie de la modification au niveau de la variable contenant des informations de filtre de transmission sur l'émetteur (300); et

le récepteur (202) est agencé en vue de transmettre au moins une partie de la modification quantifiée au niveau de la variable contenant des informations de filtre de transmission sur l'émetteur (300) to l'émetteur (300).

**28.** Système de radiocommunication selon la revendication 17,
**caractérisé en ce que**

les moyens (380) en vue de générer, au niveau du récepteur (202), une variable contenant des informations de filtre de transmission sur l'émetteur (300) sont agencés en vue de générer au moins une partie de la modification au niveau de la variable contenant des informations de filtre de transmission sur l'émetteur (300) ;

les moyens (380) en vue de générer, au niveau du récepteur (202), une variable contenant des informations de filtre de transmission sur l'émetteur (300) sont agencés pour quantifier au moins une partie de la modification au niveau de la variable contenant des informations de filtre de transmission sur l'émetteur (300) en utilisant une norme de Mode 1 ; et

le récepteur (202) est agencé en vue de transmettre au moins une partie de la modification quantifiée au niveau de la variable contenant des informations de filtre de transmission sur l'émetteur (300) à l'émetteur (300).

29. Système de radiocommunication selon la revendication 17,
**caractérisé en ce que**
les moyens (380) en vue de générer, au niveau du récepteur (202), une variable contenant des informations de filtre de transmission sur l'émetteur (300) sont agencés en vue de générer au moins une partie de la modification au niveau de la variable contenant des informations de filtre de transmission sur l'émetteur (300) ;
les moyens (380) en vue de générer, au niveau du récepteur (202), une variable contenant des informations de filtre de transmission sur l'émetteur (300) sont agencés pour quantifier au moins une partie de la modification au niveau de la variable contenant des informations de filtre de transmission sur l'émetteur (300) en utilisant une norme de Mode 2; et
le récepteur (202) est agencé en vue de transmettre au moins une partie de la modification quantifiée au niveau de la variable contenant des informations de filtre de transmission sur l'émetteur (300) à l'émetteur (300).

30. Système de radiocommunication selon la revendication 17,
**caractérisé en ce que**
les moyens (380) en vue de générer, au niveau du récepteur (202), une variable contenant des informations de filtre de transmission sur l'émetteur (300) sont agencés afin de déterminer l'effet de la modification au niveau de la variable contenant des informations de filtre de transmission sur l'émetteur (300) sur la capacité de transfert de données orientée de l'émetteur (300) au récepteur (202), et
les moyens (380) en vue de générer, au niveau du récepteur (202), une variable contenant des informations de filtre de transmission sur l'émetteur (300) sont agencés pour sélectionner, sur la base de l'effet déterminé, la partie de la modification au niveau de la variable contenant des informations de filtre de transmission sur l'émetteur (300) à transmettre du récepteur (202) à l'émetteur (300).

31. Système de radiocommunication selon la revendication 17,
**caractérisé en ce que**
les moyens (380) en vue de générer, au niveau du récepteur (202), une variable contenant des informations de filtre de transmission sur l'émetteur (300) sont agencés afin de déterminer l'effet de la modification au niveau de la variable contenant des informations de filtre de transmission sur l'émetteur (300) sur la capacité de transfert de données orientée de l'émetteur (300) au récepteur (202), et
les moyens (380) en vue de générer, au niveau du récepteur (202), une variable contenant des informations de filtre de transmission sur l'émetteur (300) sont agencés afin de sélectionner la partie de la modification au niveau de la variable contenant des informations de filtre de transmission sur l'émetteur (300) à transmettre du récepteur (202) à l'émetteur (300) en vue de permettre à ladite capacité de transfert de données d'être maximisée.

32. Système de radiocommunication selon la revendication 17,
**caractérisé en ce que**
les moyens (380) en vue de générer, au niveau du récepteur (202), une variable contenant des informations de filtre de transmission sur l'émetteur (300) sont agencés afin de déterminer l'effet de la modification au niveau de la variable contenant des informations de filtre de transmission connexes à l'émetteur (300) sur le nombre de canaux parallèles disponible ; et
les moyens (380) en vue de générer, au niveau du récepteur (202), une variable contenant des informations de filtre de transmission sur l'émetteur (300) sont agencés en vue de sélectionner la partie de la modification au niveau de la variable contenant des informations de filtre de transmission sur l'émetteur (300) à transmettre du récepteur (202) à l'émetteur (300) de sorte qu'un nombre désiré de canaux parallèles disponible est atteint.

Fig. 1

PSTN 180

MSC 106    GMSC 110

140

RNS 146

RNC 220

TC 226

222 CNTL

lub 214

204

MUX 212

208 RF

B

234

236

238

210 CNTL

202 MS

216

200

Fig. 2a

202

MS

320

322

RF 330

BB 350

SC 360

UI 370

216

322

372

374

CNTL

380

Fig. 2b

37

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I.E. TELATAR.** Capacity of multi-antenna gaussian channels. *Eur.Trans. Telecomm.,* vol. 10 (6), 585-595
- **J. SALTZ.** Digital transmission over cross-coupled linear channels. *Bell Labs Tech. J.,* July 1985
- **DA-SHAN SHIU.** Wireless Communication using dual antenna arrays. Kluwer Academic Publishers, 2000

- **J. HÄMÄLÄINEN ; R. WICHMAN.** Closed loop transmit diversity for FDD WCDMA systems. *Asilomar conference on signals, systems and computers,* 2000, vol. 1, 111-115
- **J. HÄMÄLÄINEN ; R. WICHMAN.** Feedback Schemes for FDD WCDMA systems in multipath environment. *VTC Spring,* 2001, vol. 1, 238-242